# EUROPÄISCHE PATENTSCHRIFT

(11) **EP 1 807 672 B1**
(45) Veröffentlichungstag und Bekanntmachung des Hinweises auf die Patenterteilung: **01.10.2008**
(21) Anmeldenummer: 05799594.6
(22) Anmeldetag: 21.10.2005
(51) Int. Cl.: F28D 20/00, F28D 20/02, F24D 11/02, F28D 7/02, F28D 7/04, F28D 1/047

(54) **ENERGIESPEICHER, WÄRMETAUSCHERANORDNUNG FÜR EINEN ENERGIESPEICHER, ENERGIESPEICHERSYSTEM SOWIE VERFAHREN DAZU**
ENERGY ACCUMULATOR, HEAT EXCHANGER SYSTEM FOR AN ENERGY ACCUMULATOR, ENERGY STORAGE SYSTEM AND CORRESPONDING METHOD
ACCUMULATEUR D'ENERGIE, SYSTEME D'ECHANGE DE CHALEUR D'UN ACCUMULATEUR D'ENERGIE, SYSTEME D'ACCUMULATION D'ENERGIE ET PROCEDE CORRESPONDANTS

(30) Priorität: 26.10.2004 DE 102004052447
(43) Veröffentlichungstag der Anmeldung: 18.07.2007
(73) Patentinhaber: von Rohr Alex, 88045 Friedrichshafen (DE)
(72) Erfinder: von Rohr Alex, 88045 Friedrichshafen (DE)
(74) Vertreter: Kaufmann, Ursula Josefine
(86) Internationale Anmeldenummer: PCT/EP2005/011339
(87) Internationale Veröffentlichungsnummer: WO 2006/045551

(56) Entgegenhaltungen:
- EP-A- 0 031 942
- EP-A- 1 060 788
- EP-A- 1 248 064
- DE-A1- 3 130 635
- DE-A1- 3 224 854
- DE-A1- 3 420 635
- DE-A1- 10 114 257
- DE-A1- 19 608 405
- US-A- 5 109 920
- US-A- 5 423 378
- US-A- 6 138 472
- US-B1- 6 220 339

## Beschreibung

### Stand der Technik

Die Erfindung betrifft einen Energiespeicher, eine Wärmetauscheranordnung für einen Energiespeicher, ein Energiespeichersystem sowie Verfahren dazu nach den Oberbegriffen der unabhängigen Ansprüche.

Es ist bereits in der Offenlegungsschrift EP 31 942 A1 eine Heizvorrichtung vorgeschlagen worden, bei der ein Erdspeicher zur Speicherung von Wärme eingesetzt wird. Im Erdreich ist ein kompakter, mit der Umgebung in Wärmetausch stehender Wärmespeicher hoher Wärmekapazität eingegraben. Bei Wärmeentnahme mittels einer Wärmepumpe wird dieser Wärmespeicher unter die Temperatur des umgebenden Erdreichs abgekühlt, welches dann Wärme an den Wärmespeicher abgibt. Der Wärmespeicher kann mit Wasser gefüllt sein, das zur Ausnutzung der latenten Wärme bei der Phasenumwandlung von Wasser zu Eis bis auf den Gefrierpunkt oder wenig darunter abgekühlt wird und bei einer nachfolgenden Wärmezufuhr an den Wärmespeicher große Wärmemengen bei geringen Temperaturänderungen aufnehmen kann. Um die Wärmepumpe mit möglichst konstantem Temperaturniveau betreiben zu können, liegt die Temperatur des Wärmespeichers ständig um den Gefrierpunkt. Der Wärmespeicher ist so tief im Erdreich angeordnet, dass er auch in der kalten Jahreszeit unterhalb der Bodenfrostgrenze angeordnet ist.

Es ist bereits in der Offenlegungsschrift DE 28 03 458 ein Energiespeichersystem vorgeschlagen worden, bei dem ein Energiespeicher in Kombination mit einer Wärmepumpe eingesetzt wird. Der Energiespeicher umfasst einen Erdspeicher, in dem Solarenergie gespeichert wird. Die gespeicherte Solarenergie wird zur direkten Nutzung z.B. über ein solar erwärmtes Wärmeträgermedium Heizkörper zugeführt und zur indirekten Nutzung in dem Erdkollektor gespeichert, indem Umgebungswärme in diesen einfließt. Im Erdreich ist hierzu ein kompakter, mit der Umgebung in Wärmetausch stehender Speicher für das solar erwärmte Wärmeträgermedium versenkt und von Wärmetauschern des Erdkollektors umgeben, wobei das Erdreich das eigentliche Speichermedium des Energiespeichers darstellt. Zur optimalen Funktion steht der Erdkollektor mit Grundwasser in Wärmeaustausch. Bei der zu speichernden Energieform handelt es sich um direkt nutzbare Wärme, die über das erwärmte Wärmeträgermedium unmittelbar aus dem Wärmespeicher in angeschlossene Verbraucher geleitet wird, oder um indirekt nutzbare Wärme, welche aus dem Erdkollektor über die Wärmepumpe auf ein höheres, nutzbares Temperaturniveau gehoben wird.

Die Offenlegungsschrift DE 32 24 854 A1 offenbart einen Energiespeicher zum Speichern von Wärme. Ein innerer Speicher ist in einem zweiten Speicher thermisch isoliert gegen diesen zweiten Speicher angeordnet. Der innere Speicher ist mit Paraffin gefüllt und bildet einen Latentspeicher, der jedoch auf einer relativ hohen Temperatur, nämlich der Schmelztemperatur des Paraffins, gehalten wird. Der zweite Speicher ist gegen die Umgebung thermisch isoliert. Der innere Speicher wird auf eine hohe Temperatur, etwa zwischen 30°C und 120°C aufgeheizt, die beispielsweise für heißes Brauchwasser ausreicht. Die thermische Isolierung zwischen dem ersten und zweiten Speicher soll dafür sorgen, dass der innere Speicher lange auf der gewünschten hohen Temperatur bleiben kann, um stets eine ausreichende Wärmemenge zur Verfügung stellen zu können.

Aus der gattungsgemäßen Offenlegungsschrift DE 101 14 257 A1 ist ein als Erdwärmespeicher ausgebildeter Energiespeicher sowie ein entsprechendes Energiespeichersystem und deren Betriebsverfahren bekannt. Ein erster Speicher ist von einem zweiten Speicher umgeben. Die Speicher stehen im Wärmetausch miteinander. In den beiden Speichern sind Rohrbündelwärmetauscher vorgesehen, die in das Erdreich hineinragen und die ein zeitgleiches Be- und Entladen der Speicher ermöglichen, wobei die Entladetemperatur und die Ladetemperatur auf gleicher Höhe sein sollen. Die Funktion des äußeren zweiten Speichers besteht darin, den inneren ersten Speicher gegen einen Wärmeeintrag von außen aus dem ungebenden Erdreich zu schützen. Dabei wird angestrebt, die Temperatur im Inneren des ersten Speichers konstant zu halten. Der Speicher soll nicht abgekühlt, sondern durch die thermisch isolierende Wirkung der Randzone möglichst auf konstanter Temperatur gehalten werden und zudem permanent befüllbar sein. Eine Eisbildung ist unerwünscht. Das Ziel des Speichers ist, jederzeit Wärmeenergie zur Verfügung zu stellen.

Eine Anordnung, bei der ein Speicherbehälter an der Innenseite seines Gehäuses mit einer Lage Wärmetauscherrohre versehen ist, offenbart die Offenlegungsschrift DE 34 20 635 A1. Der im Erdreich vergrabene Speicherbehälter soll vor dem Einfrieren geschützt werden, und eine Eisbildung findet nur an den gehäusenahen Bereichen des Speicherbehälters statt. Damit kann eine Sprengwirkung der Eisbildung vermieden werden. Der Speicherbehälter verjüngt seinen Durchmesser mit zunehmender Tiefe im Erdreich.

Eine Wärmetauscheranordnung für einen isothermen katalytischen Reaktor mit konzentrisch gewickelten Wärmetauscherrohren ist aus der EP 1 060 788 A1 bekannt. Die Wärmetauscheranordnung ist aus einer Mehrzahl von übereinander gestapelten Ebenen gebildet. Die Wicklungen sind gleichmäßig beabstandet oder können am Rand dichter ausgeführt sein als im Zentrum. Damit kann ein Temperaturprofil der katalytischen Reaktion zur besseren Wärmeabfuhr nachgebildet werden.

Eine Wärmetauscheranordnung für einen Eisspeicher offenbart das Patent US 6,138,472 A1. Dort ist eine Wärmetauscheranordnung für einen Energiespeicher mit einem ersten Speicher beschrieben, der ein erstes Speichermedium umfasst. Es ist ein Stapel aus einer Mehrzahl von übereinander liegenden, in einer Stapelrichtung axial beabstandeten Ebenen mit Wärmetauscherrohren vorgesehen. Das Problem der Sprengwirkung beim Einfrieren von Wasser wird nicht betrachtet.

Ferner ist aus der EP1 248 064 A1 ein Wärmeübertrager bekannt, bei dem die Wärmeträgerrohre in Ebenen übereinander angeordnet sind und die in jeder Ebene als Doppelspiralen konzentrisch gewunden sind. Dadurch liegen Vorlauf und Rücklauf alternierend sowohl in jeder Ebene nebeneinander als auch von Ebene zu Ebene übereinander.

Aufgabe der Erfindung ist es, einen Energiespeicher so zu verbessern, dass dieser saisonal betreibbar ist und einem Verbraucher sowohl Wärme als auch Kälte zur Verfügung stellen kann. Ferner ist es Aufgabe der Erfindung, eine Wärmetauscheranordnung für einen Energiespeicher sowie ein Verfahren zum Betreiben eines Energiespeichers anzugeben. Weiterhin soll ein Energiespeichersystem so verbessert werden, dass dieses saisonal betreibbar ist und einem Verbraucher mit einer günstigen Energiebilanz nicht nur Wärme, sondern auch Kälte zur Verfügung stellen kann. Ferner ist es Aufgabe der Erfindung, ein Verfahren zum Betreiben eines Energiespeichersystems anzugeben.

Die Aufgabe wird durch die Merkmale der unabhängigen Ansprüche gelöst.

Ausgehend von einem Energiespeicher mit einem inneren ersten Speicher mit einem ersten Speichermedium und einer ersten Wärmetauscheranordnung und einem äußeren, den ersten Speicher umgebenden zweiten Speicher mit einem zweiten Speichermedium, wobei der erste Speicher mit dem zweiten Speicher in Wärmeaustausch steht, ist vorgesehen, dass der erste und der zweite Speicher während eines ersten Zeitraums als Kältespeicher ausgebildet sind, wobei Wärme aus dem ersten und/oder zweiten Speichermedium entnehmbar ist und dass der erste und der zweite Speicher während eines zweiten Zeitraums als Wärmespeicher ausgebildet sind, wobei Kälte aus dem ersten und/oder zweiten Speichermedium entnehmbar ist.

Eine hohe Speicherkapazität bei kompaktem Bauraum wird geschaffen, da das erste Speichermedium unter Freisetzung oder Aufnahme von latenter Wärme seinen Aggregatzustand ändert. Ein solcher Latentspeicher kann bei der Temperatur des Aggregatswechsels eine hohe Energiemenge speichern oder abgeben, ohne dass die Temperatur des Speichermediums sich wesentlich ändert. Als Speichermedium ist Wasser bevorzugt.

Das zweite Speichermedium umfasst Erdreich. Damit ist eine relativ einfache Vorrichtung als Energiespeicher ohne besonders aufwändige Maßnahmen bei der Erstellung des Energiespeichers möglich, die zudem Platz sparend unter Parkplätzen, Zufahrtswegen und dergleichen vergraben werden kann.

Der zweite Speicher weist eine zweite Wärmetauscheranordnung auf. Damit kann der zweite, den ersten Speicher umgebenden Speicher gezielt zugeschaltet oder abgeschaltet werden, indem dessen Wärmetauscheranordnung zugeschaltet oder abgeschaltet wird. Die Wärmetauscheranordnung, ebenso wie die des ersten Speichers, wird einerseits als Erdkollektor genutzt, um nachfließende Wärme des Erdreichs nutzen zu können, andererseits machen sie den ersten Speicher und das Erdreich zum Speicher für extern zugeführte Energie. Durch die Wärmetauscherrohre des ersten und des zweiten Speichers zirkuliert zweckmäßigerweise ein gleichartiges Wärmeträgermedium.

Der Energiespeicher stellt damit einen saisonalen Langzeit-Energiespeicher dar, der insbesondere das jeweilige Abfallprodukt aus einem Wärmepumpenprozess über Monate speichern kann. Vorzugsweise ist der Energiespeicher im Erdreich vergraben. Der erste Speicher ist vorzugsweise ein Latentspeicher mit einem Speichermedium, das bei einem Aggregatswechsel, beispielsweise von flüssig nach fest, latente Wärme abgibt bzw. beim Wechsel von fest nach flüssig, speichert. Bevorzugt weist der erste Speicher Wasser als Speichermedium und der zweite Speicher Erdreich als Speichermedium auf. Dabei wirkt eine Grundwasserberührung des Energiespeichers zwar energetisch günstig, ist jedoch keineswegs für die Funktion des Energiespeichers notwendig. Ebenso wenig ist es notwendig, den Energiespeicher so tief einzugraben, dass er unterhalb der Bodenfrostgrenze angeordnet ist. Die Temperatur des ersten Speichers variiert deutlich zwischen der Gefriertemperatur von Wasser und einer Umgebungstemperatur im Speicher, insbesondere von knapp unterhalb von 0°C und etwa 10°C, insbesondere 8°C.

Üblicherweise nutzt eine Wärmepumpe zu einem Teil die Wärme der Umwelt als Energiequelle zum Heizen. Die Energiequelle wird dabei abgekühlt. Eine auch für Kühlzwecke geeignete Wärmepumpe entzieht in einer kalten Jahreszeit, entsprechend beispielsweise dem Winter, der Umgebung Energie und kühlt diese ab, während sie in der warmen Jahreszeit, in diesem Beispiel dem Sommer entsprechend, der Umgebung Energie zuführt und dabei die Umgebung erwärmt wird. Bei der Energieentnahme in der kalten Jahreszeit und der Energiezufuhr in der warmen Jahreszeit handelt es sich jeweils um den jeweils nicht nutzbaren Energieanteil des Wärmepumpenprozesses und damit um ein thermisches Abfallprodukt. Der erfindungsgemäße Energiespeicher ermöglicht die Nutzung des bisher weitgehend ungenutzten Abfallprodukts. Bevorzugt wird in der kalten Jahreszeit dem Energiespeicher Energie zu Heizzwecken entnommen und in der warmen Jahreszeit überschüssige Energie zugeführt. Zur Entnahme von Kälte in der warmen Jahreszeit ist keine Wärmepumpe notwendig, so dass ein Betrieb einer Wärmepumpe vorteilhaft nur in der kalten Jahreszeit notwendig ist. Ferner ist zur Erzeugung von Kälte in der warmen Jahreszeit praktisch kein zusätzlicher Energieeinsatz in der warmen Jahreszeit notwendig, da lediglich die in der kalten Jahreszeit gespeicherte Kälte dem Energiespeicher entnommen wird. Unter dem der Anschaulichkeit wegen verwendeten Begriff "Zufuhr von Kälte" ist im Übrigen der Entzug von Wärme zu verstehen.

Nur ein Teil der in der kalten Jahreszeit in Form von Wärme entnommenen Energie wird dem Energiespeicher in der warmen Jahreszeit auf natürliche Weise wieder zugeführt. Es ist daher vorteilhaft für das Energiegleichgewicht des Energiespeichers, wenn in der warmen Jahreszeit ein großer Teil der Energie durch externe Quellen, beispielsweise in Form von Abwärme einer Gebäudekühlung oder verschiedener anderer, in der warmen Jahreszeit zur Verfügung stehende Wärmequellen eingespeist wird.

Anstatt einer Wärmequelle "Umwelt" wird der im Erdreich vergrabene, vorzugsweise mit Wasser als Speichermedium gefüllte erste Speicher als Wärmequelle verwendet. Wenn dieser Speicher in der kalten Jahreszeit als Wärmequelle genutzt wird, wird dem Speicher über die Wärmepumpe Wärme entzogen ("Kälte zugeführt") und dieser somit thermisch entladen. Der thermische Entladevorgang wird vorzugsweise so lange betrieben, bis das Wasser seinen Aggregatszustand von flüssig nach fest geändert hat und das erste Speichermedium vollständig eingefroren ist. Aufgrund der latenten Wärme des Wassers bedeutet dies eine sehr große Speicherkapazität des ersten Speichers. Je nach Betriebsbedingungen kann auch Feuchtigkeit, die im Erdreich, welches das bevorzugte Speichermedium des zweiten Speichers darstellt, eingefroren oder das Erdreich zumindest abgekühlt werden. Das in der kalten Jahreszeit im ersten Speicher entstandene Eis kann in der warmen Jahreszeit wie erwähnt jedoch zur Kühlung genutzt werden. Da der erste Speicher mit dem zweiten Speicher und damit auch mit dem umgebenden Erdreich in Wärmeaustausch steht, wirkt eine äußere Oberfläche seines Gehäuses vorteilhaft als Erdsonde bzw. Erdkollektor.

Der erfindungsgemäße Energiespeicher dient sowohl als Energiequelle der Wärmepumpe für den Heizbetrieb in der kalten Jahreszeit als auch als Energiequelle zur Kühlung in der warmen Jahreszeit, was ohne energetischen Zusatzaufwand möglich ist. Weiterhin dient der Energiespeicher als praktisch verlustfreier Wärmespeicher für überschüssige Wärme der warmen Jahreszeit. Durch die hohe Leistungsdichte wenigstens des ersten Energiespeichers kann die nutzbare Kälteleistung bei Bedarf vervielfacht werden. Weiterhin kann das Erdreich im zweiten Speicher und im den Energiespeicher umgebenen Bereich als erweiterter Wärme- und Kältespeicher genutzt werden. Dem Energiespeicher ist in der kalten Jahreszeit Wärme auf relativ niedrigem Temperaturniveau entnehmbar, die beispielsweise durch eine Wärmepumpe für ein höheres Temperaturniveau genutzt werden kann. In der warmen Jahreszeit ist Kälte entnehmbar, die zu Kühlzwecken verwendet werden kann. Unter "Entnehmen von Kälte" oder "Entnehmen von Kälteleistung" ist eine Zufuhr von Wärme in den Energiespeicher zu verstehen.

Weitere Merkmale und Vorteile der Erfindung sind den weiteren Ansprüchen sowie der Beschreibung zu entnehmen.

Weist der erste Speicher eine Speicherkapazität auf, die so bemessen ist, dass vor Ablauf des ersten Zeitraums der erste Speicher vollständig entladen ist, kann ein vorteilhafter Wirkungsgrad des Energiespeichers erzielt werden. Ist der erste Zeitraum die kalte Jahreszeit, also beispielsweise Winter, so bedeutet dies, dass der Energiespeicher vor Ablauf der kalten Jahreszeit, beispielsweise des Winters, komplett eingefroren ist und immer noch Heizbedarf besteht. In der kalten Jahreszeit kann die im Speichermedium gespeicherte Energie mittels einer Wärmepumpe entnommen werden, wobei im ersten Speicher tiefe Temperaturen entstehend, die unterhalb der durchschnittlichen Temperatur des Erdreichs liegen können. Sofern das Speichermedium Wasser ist, friert dieses ein. Durch die schlechte Wärmeleitfähigkeit des Erdreichs verharrt die jeweilige Energieform - Wärme oder Kälte-, nahezu im ersten Speicher. So kann die in der warmen Jahreszeit, beispielsweise im Sommer zur Verfügung stehende Abwärme in der darauf folgenden kalten Jahreszeit, beispielsweise im Winter, und das durch Wärmeentzug entstehende Eis in der darauf folgenden warmen Jahreszeit genutzt werden. Durch die Dimensionierung des ersten Speichers ist gewährleistet, dass die Temperatur des Energiespeichers meistens unterhalb der des Erdreichs liegt. Auf diese Weise kann eine praktisch verlustfreie Speicherung der von externen Quellen zugeführten Wärme ermöglicht werden. Hierzu gehört, wie oben bereits erwähnt, auch in der warmen Jahreszeit im Überfluss vorhandene Wärme von Solaranlagen, Abwärme aus Prozessen, Abwärme aus Blockheizkraftwerken und dergleichen mehr, der mit dem Energiespeicher ein nahezu verlustfreier Speicher zur Verfügung steht. Die genaue Dimensionierung des ersten Speichers kann von einem Fachmann sinnvollerweise abhängig von der Leistung der Wärmepumpe festgelegt werden.

Der Energiespeicher ist dadurch besonders für gemäßigte Regionen geeignet, in der im Jahresablauf eine Heizperiode in der kalten Jahreszeit höchstens gleich lang dauert oder eher kürzer ist als eine Kühlperiode in der warmen Jahreszeit, d.h. in denen dem Energiespeicher in der Regel weniger Wärme aus der Umgebung zugeführt werden kann wie entnommen wird. So dauert in Mitteleuropa eine winterliche Heizperiode, in der geheizt wird, typischerweise 5 Monate, während eine sommerliche Kühlperiode, in der gekühlt wird, entsprechend 7 Monate dauert.

Bevorzugt ist die Speicherkapazität so bemessen, dass der erste Speicher nach etwa der Hälfte des ersten Zeitraums vollständig thermisch entladen ist. Unter "thermisch entladen" ist beispielsweise bei Wasser als Speichermedium zu verstehen, dass das Wasser vollständig zu Eis gefroren ist, oder, allgemeiner ausgedrückt, in der das Speichermedium beim Abkühlen einen Aggregatswechsel vollständig durchgeführt hat und die dabei anfallende latente Wärme abgegeben hat. Beim Aggregatswechsel in die andere Richtung wird die latente Wärme wieder aufgenommen. Bei Bedarf kann selbstverständlich auch eine andere Dimensionierung gewählt werden und der erste Speicher zu einem anderen geeigneten Zeitpunkt thermisch entladen sein. Bei Wasser als Speichermedium weist der thermisch entladene Energiespeicher eine Temperatur von geringfügig unter 0°C auf ("-0°C") und ist von Erdreich umgeben, das in gemäßigten Breiten eine durchschnittliche Temperatur von etwa 8°C aufweist, was einen Energiefluss aus dem Erdreich in den Speicher sicherstellt. Bei verschiedenen üblichen Energiespeichern ist ein solcher Energiefluss unerwünscht und wird üblicherweise sogar mit thermischer Isolierung unterbunden. Im erfindungsgemäßen Energiespeicher vergrößert dieser Energiefluss allerdings die Kapazität des Energiespeichers, was eine große Designfreiheit bei der Auslegung des Energiespeichers erlaubt.

Zweckmäßigerweise ist das erste Speichermedium in einem starren Gehäuse gespeichert. Das Gehäuse ist vorzugsweise als Hohlzylinder ausgebildet. Damit wird eine besonders einfache und zuverlässige Montage einer bevorzugten Wärmetauscheranordnung ermöglicht. Denkbar sind jedoch durchaus auch andere Formen, die der Fachmann nach Bedarf auswählen wird. Ein bevorzugtes Material ist Beton. Da der Energiespeicher keine große Mindesteinbautiefe benötigt, kann das Gehäuse zweckmäßigerweise so ausgestaltet sein, dass es befahrbar ist. Die Größe des Gehäuses kann an den jeweiligen Bedarf angepasst sein. Dazu kann bei größeren Durchmessern des Gehäuses aus statischen Gründen auch eine Stützstrebe in der Zylindermitte angeordnet sein, die einen Deckel des Gehäuses trägt, der ein hohes Fahrzeuggewicht tragen kann. Zusätzlich ist eine besonders vorteilhafte Bauart und Montage der bevorzugten Wärmetauscheranordnung im ersten Speicher möglich. Der Deckel kann vor dem Einbau der Wärmetauscheranordnung auf die Gehäusewände gesetzt werden und die Wärmetauscheranordnung nachträglich in das Gehäuse eingebracht werden.

In einer vorteilhaften Ausgestaltung ist die erste Wärmetauscheranordnung so in dem Gehäuse angeordnet, dass eine Erwärmung und/oder ein Abkühlen im Wesentlichen von innen nach außen und axial in einer vorgegebenen Richtung erfolgt, und zwar bei einem im Erdreich angeordneten Energiespeicher günstigerweise von unten nach oben zur Erdoberfläche hin. Damit können optimierte Übertragungsbedingungen der Energie bzw. Wärme in den und aus dem Speicher gewährleistet sowie eine homogene Temperaturverteilung über das gesamte Volumen des ersten Speichers und auch des Energiespeichers erreicht werden. Weiterhin vermeidet diese Ausgestaltung der Wärmetauscheranordnung zuverlässig eine Sprengwirkung auf das Gehäuse beim Einfrieren und Auftauen von Wasser als Speichermedium des ersten Speichers.

Besonders günstig ist es, wenn die zweite Wärmetauscheranordnung Wärmetauscherrohre, vorzugsweise ein Form von Schlauchwicklungen, umfasst. Die Schlauchwicklungen sind vorzugsweise im Wesentlichen einlagig ausgebildet. Das Material kann beliebig sein, etwa Metall oder Kunststoff; als preiswertes und dauerhaftes Material wird bevorzugt Polyethylen eingesetzt.

In einer günstigen Weiterbildung sind die Wärmetauscherrohre unter und/oder neben und/oder über dem Gehäuse angeordnet. Reicht die im ersten Energiespeicher enthaltene Energiemenge nicht aus, kann im durch den zweiten Speicher erweiterten Bereich Energie entnommen und aktiv auch wieder zugeführt werden. Da durch den für das Gehäuse notwendigen Aushub ohnehin eine Baugrube und damit eine große unterirdische Kontaktfläche zum Erdreich vorhanden ist, kann diese Kontaktfläche zum Anbringen einer Wärmetauscherfläche zum Austausch von Energie mit dem Erdreich vorteilhaft genutzt werden. Die Wärmetauscherrohre sind in einer vorteilhaften Weise so gewickelt, dass diese möglichst konzentrisch angeordnet sind und jeweils ein Vorlauf über und/oder neben einem Rücklauf angeordnet ist. Dadurch sind eine bessere Gleichmäßigkeit der Temperaturverteilung und eine hohe Übertragungsleistung möglich.

Bei einer horizontalen Anordnung eines oder mehrerer Wärmetauscherrohre unterhalb des Gehäuses des ersten Speichers kann der Kontakt zum Erdreich hauptsächlich zur Energiespeicherung eingesetzt werden. Ist durch die relativ große Tiefe des Bereichs das Erdreich in diesem Bereich relativ feucht, beispielsweise durch Grundwassernähe, wird der Effekt der Energieübertragung zusätzlich positiv beeinflusst. Dies ist jedoch nicht Voraussetzung für das Funktionieren des Energiespeichers. Bei einer vertikalen Anordnung neben dem Gehäuse des ersten Speichers erfassen das oder die Wärmetauscherrohre den gesamten Bereich des Erdreichs um den Energiespeicher und somit ein sehr großes Volumen. Dieser Bereich kann vorteilhaft als Energiequelle genutzt werden, da aus dem Erdreich um den Energiespeicher herum Energie in Form von Wärme nachfließen kann. Da der Energiefluss jedoch träge ist, kann der Bereich auch als Speicher für extern zugeführte Energieformen genutzt werden. Bei einer horizontalen Anordnung auf dem Gehäuse des ersten Speichers funktionieren die Wärmetauscherrohre, insbesondere Schlauchwicklungen, wie ein klassischer, horizontaler Erdkollektor, welcher die direkt aus der Umgebung stammende Wärme aufnehmen kann. Darüber hinaus kann so auch das auf dem Speicher befindliche Erdreich zum Speicher für extern zugeführte Energie werden.

Wird dem Erdreich um den thermisch entladenen ersten Speicher, beispielsweise mit gefrorenem Speicherkern, Energie entzogen und dieses dabei ausgekühlt, wirkt sich dies wie eine thermische Isolierung zwischen Erdreich und erstem Speicher aus. Das im ersten Speicher thermisch entladene Speichermedium, bevorzugt in Form von Eis, wird damit vor unerwünschter Energiezufuhr geschützt und kann in der darauf folgenden warmen Jahreszeit zu Kühlzwecken eingesetzt werden.

Bevorzugt umfasst die erste Wärmetauscheranordnung wenigstens eine Ebene mit wenigstens einem Wärmetauscherrohr, das im Wesentlichen konzentrisch in der Ebene gewickelt ist. Eine homogenere Temperaturverteilung wird erreicht, wenn die Wicklung so ausgeführt ist, dass eine Rücklaufleitung neben einer Vorlaufleitung zu liegen kommt. Damit kann eine mittlere Temperatur eingestellt werden, die der mittleren Temperatur zwischen Vorlauf und Rücklauf eines in dem Wärmetauscherrohrs zirkulierenden Wärmeträgermediums entspricht.

Das Wärmetauscherrohr wird vorzugsweise U-förmig in der Ebene befestigt, wobei die Basis der U-Form zentral angeordnet ist und die beiden Enden der U-Form sich am äußeren Umfang der Ebene befinden bzw. zu einem Ventil außerhalb des Energiespeichers geführt sind. Günstigerweise sind die Wärmetauscherrohre jeweils auf einer speichenradähnlichen Basis angeordnet, welche als Träger der Wärmetauscherrohre dienen.

In einer besonders günstigen Ausgestaltung ist die Wärmetauscheranordnung des ersten Speichers aus einem Stapel einer Mehrzahl von übereinander liegenden Ebenen mit Wärmetauscherrohren gebildet. Damit kann einerseits die Anomalie des Wassers positiv genutzt und andererseits eine gleichmäßige Abkühlung und Aufwärmung des Speichermediums innerhalb des ersten Speichers über dessen gesamte Höhe erreicht werden. Damit kann insbesondere verhindert werden, dass sich an der Oberfläche des ersten Speichers eine Eisschicht bildet, welche eine Volumenausdehnung des Wassers beim Einfrieren verhindert.

Damit eine Sprengwirkung auf das Gehäuse beim Einfrieren des Speichermediums vermieden wird, sind die Wärmetauscherrohre in jeder Ebene so gewickelt, dass in einem inneren, zentralen Bereich ein geringerer Abstand zwischen den im Wesentlichen konzentrischen Wicklungen eingestellt ist als in einem umfangsnahen Bereich der Ebenen. Vorteilhafterweise können die Ebenen analog von unten nach oben in größer werdenden Abständen angeordnet sein. Zusätzlich kann über der obersten Ebene ein ausreichender Luftraum vorgesehen sein, damit sich das Eis ausdehnen kann.

Die Wärmetauscherrohre sind vorzugsweise aus Schlauchmaterial, insbesondere aus Polyethylen, gebildet.

Der Energiespeicher kann kurzfristig insbesondere eine erhebliche Kälteleistung zur Verfügung stellen. Die maximale Entzugsleistung an Kälte (entsprechend der Aufnahmekapazität für zugeführte Wärme) wird dabei über die Anzahl und die Dichte der Wärmetauscherrohre im Speicherinnern gegeben. Dabei können einzelne Ebenen im Normalbetrieb abgeschaltet sein und bei erhöhtem Bedarf zugeschaltet werden.

Ebenso kann vorgesehen sein, dass in einzelnen oder allen Ebenen ein oder mehr zusätzliche Wärmetauscherrohre vorgesehen sind und diese entsprechend bedarfsweise zugeschaltet oder abgeschaltet werden können.

Damit sind besonders vorteilhaft eine Kälteversorgung und gegebenenfalls auch eine Wärmeversorgung von Einrichtungen möglich, die nur an wenigen Tagen im Jahr einen hohen Bedarf insbesondere an Kälte haben, wie dies beispielsweise bei Messebetrieben üblich ist. Üblicherweise muss eine Klimatisierung dort so ausgelegt sein, dass sie den erheblichen Kältebedarf an den wenigen Tagen decken kann, an denen Messebetrieb herrscht. Außerdem muss die Kälteleistung aktiv unter zeitgleichem Energieeinsatz, etwa mit Kompressoren mit entsprechender kostenintensiver Verlustwärme, erzeugt werden. An den restlichen Tagen ist der Bedarf erheblich geringer, so dass die Klimatisierung für die meiste Zeit des Jahres zwangsweise überdimensioniert sein muss. Mit dem erfindungsgemäßen Energiespeicher kann dagegen mit einer relativ kleinen und kompakten Anlage schnell und ohne zeitgleichen aktiven Energieeinsatz im Spitzenbetrieb eine erheblich größere Kälte leistung aus dem Energiespeicher entnommen werden, als dem Normalbetrieb entspricht. Dies kann durch eine geeignete Auslegung der Anzahl der Ebenen und/oder Wärmetauscherrohren mit einer entsprechenden Dichte der Wärmetauscherrohre durch bedarfsweises Zuschalten von Ebenen und/oder Wärmetauscherrohren erfolgen, die wieder abgeschaltet werden können, wenn sie nicht mehr benötigt werden.

In einer vorteilhaften Ausgestaltung sind die Wärmetauscherrohre der verschiedenen Ebenen strömungstechnisch parallel geschaltet und von einem Wärmeträgermedium parallel durchströmbar in dem Sinne, dass jede Ebene separat ansteuerbar ist. Es ist jedoch auch denkbar, dass die Wärmetauscherrohre der einzelnen Ebenen über einen Verteiler mit Wärmeträgermedium versorgt werden. Bevorzugt ist jedoch, dass jede Ebene und/oder jedes Wärmetauscherrohr im Wesentlichen unabhängig von der Durchströmung der benachbarten Ebenen und/oder Wärmetauscherrohren ausgestaltet ist. Dies erlaubt das besagte Zuschalten und Wegschalten von Wärmetauscheranordnungen auf einfache Weise, um beispielsweise die Menge der entnehmbaren Wärme zu variieren.

In einer vorteilhaften Weiterbildung sind Schaltmittel vorgesehen, um einzelne Ebenen und/oder Wärmetauscherrohre von einer Wärmeträgerdurchströmung zu trennen und/oder mit einer Wärmeträgerdu rchströmung zu beaufschlagen. Damit kann insbesondere eine Wärmeentnahme oder eine Kälteentnahme bedarfsgerecht gesteuert werden, um Spitzenlasten abzudecken.

Bei einer erfindungsgemäßen Wärmetauscheranordnung für einen Energiespeicher mit einem ersten Speicher mit einem ersten Speichermedium ist vorgesehen, dass wenigstens eine Ebene mit einem Wärmetauscherrohr vorgesehen ist, das im Wesentlichen konzentrisch in der Ebene aufgewickelt ist. Die Wärmetauscheranordnung ist von einem Wärmeträgermedium durchströmbar, das Wärme zuführt bzw. abführt. Nebeneinander liegende Windungen sind sinnvollerweise so beabstandet, dass beim thermischen Entladen, insbesondere bei Wasser als Speichermedium, ein von der jeweiligen Windung ausgehender Eismantel mit dem Eismantel der nächsten benachbarten Windung sicher in Berührung kommt. Zweckmäßigerweise weisen zentrumsnahe Windungen einen geringeren Abstand zueinander auf als zentrumsfeme Windungen. Damit kann der zentrumsnahe Bereich schneller bei Wärmeentnahme abgekühlt werden oder bei Wärmezufuhr aufgewärmt werden als der zentrumsfeme Bereich. Das Wärmetauscherrohr ist vorzugsweise U-förmig ausgebildet und so aufgewickelt, dass es einlagige Windungen bildet, wobei die Basis der U-Form zentrumsnah oder im Zentrum angeordnet ist und die beiden Enden der U-Form an den Umfang der Ebene geführt sind. Dabei bildet einer der Schenkel des U-förmigen Wärmetauschers einen Vorlauf, mit dem das Wärmeträgermedium zugeführt wird und der andere Schenkel einen Rücklauf, mit dem das Wärmeträgermedium abgeführt wird. Vorlauf und Rücklauf können auch tauschbar sein, indem eine Umschaltung der Durchflussrichtung des Wärmeträgermediums, beilspielsweise über ein oder mehrere Umkehrventile oder andere Strömungsumkehrmittel, vorgesehen ist. Die Wärmetauscheranordnung ist besonders für einen Energiespeicher geeignet, der einen ersten inneren, als Latentspeicher ausgebildeten Speicher aufweist, der von einem zweiten als Erdkollektor oder Erdsonde ausgebildeten Speicher umgeben ist und mit diesem in Wärmeaustausch steht.

Bezogen auf aufeinander folgende Ebenen ist jeweils eine Vorlaufleitung über und/oder unter einer Rücklaufleitung angeordnet. Dadurch kann eine verbesserte homogene Temperaturverteilung und eine verbesserte homogene Leistungsentnahme der Wärmetauscheranordnung erreicht werden. Weiterhin ist radial neben einer Vorlaufleitung eine Rücklaufleitung angeordnet, womit eine weitere Verbesserung der Temperaturverteilung gelingt.

Besonders bevorzugt ist eine Wärmetauscheranordnung, bei der der Stapel wenigstens bereichsweise ein Halbkugelprofil aufweist. Befindet sich das Halbkugelprofil im bodennahen Bereich, wird eine Sprengwirkung beim Einfrieren des Speichermediums besonders wirkungsvoll unterbunden. Mit Vorteil kann das Halbkugelprofil mit einem dem deckelnahen Bereich des ersten Speichers zugewandten Zylinderprofil kombiniert werden. Durch günstigerweise entstehenden thermischen Auftrieb und Abtrieb im Bereich mit Zylinderprofil kann das Einfrieren und Auftauen noch homogener und kontrollierter erfolgen.

Vorzugsweise ist ein Stapel aus einer Mehrzahl von übereinander liegenden, in einer Stapelrichtung axial beabstandeten Ebenen mit Wärmetauscherrohren vorgesehen. Vorzugsweise ist der Abstand an einem Ende des Stapels geringer als am anderen Ende des Stapels. Damit kann das Ende mit den dichter angeordneten Ebenen schneller abgekühlt oder aufgewärmt werden als das Ende mit den weniger dicht angeordneten Ebenen. Zweckmäßigerweise kann der abstand der Ebenen so gewählt werden, dass beim thermischen Entladen, insbesondere bei Wasser als Speichermedium, ein von der jeweiligen Ebene ausgehender Eismantel mit dem Eismantel der nächsten benachbarten Ebene sicher in Berührung kommt.

In einer besonders vorteilhaften Ausgestaltung umfasst wenigstens eine der Ebenen eine speichenradähnliche Basis, auf welcher das jeweilige der Wärmetauscherrohre angeordnet ist. Ein Vorteil ist, dass auf diese Weise eine nachträgliche Installation der Wärmetauscheranordnung in ein im Wesentlichen geschlossenes Gehäuse möglich ist. Im Wesentlichen geschlossen soll bedeuten, dass Montageöffnungen und Durchlassöffnungen für die Rohre vorgesehen sind, das Gehäuse aber sonst ringsum geschlossen ist. Bei der Montage der Wärmetauscheranordnung kann die Wärmetauscheranordnung durch eine schmale Öffnung in das Gehäuse eingebracht werden. Die speichenradähnliche Basis umfasst Stangen, die einzeln durch die Öffnung transportiert und die beispielsweise an einer zentralen Stütze oder Achse, vorzugsweise drehbar, so angebracht werden können, dass sie wie Speichen von der Stütze oder Achse radial weg stehen. Zweckmäßigerweise sind die Stangen mit einer Befestigung in der Art einer Muffe an der Stütze oder Achse befestigt, die gegen eine axiale Verschiebung gesichert ist, aber ein Drehen der Stangen um die Stütze ermöglicht. Günstigerweise ist die speichenradähnliche Basis zur Montage des jeweiligen des Wärmetauscherrohrs in einer Montageposition nahe der Öffnung arretierbar. Dann kann ein Wärmetauscherrohr, beispielsweise ein Kunststoffschlauch, radial von innen nach außen in einer Mehrzahl von Windungen auf den Stangen befestigt, etwa geklemmt, vorzugsweise fest geclipst werden. Dabei kann eine Stange nach der anderen an der Öffnung vorbeigedreht werden, bis die durch die Stangen gebildete speichenradähnliche Basis mit dem Wärmetauscherrohr in der gewünschten Windungszahl belegt ist. Ist die Basis mit den Windungen des Wärmetauscherrohrs fertig belegt, kann die Basis nach unten in ihre Endposition abgesenkt werden und die Stangen der nächsten Basis eingebracht, mit Wärmetauscherrohr belegt werden und so fort bis die gewünschte Zahl von Ebenen mit Wärmetauscherrohren fertig gestellt ist.

Vorzugsweise sind die Wärmetauscherrohre in jeder Ebene im Wesentlichen konzentrisch angeordnet. Dadurch stellt sich zwischen den Windungen jeweils eine homogene mittlere Temperatur ein. Je homogener die Temperaturverteilung einstellbar ist, desto günstiger ist der Wärmeübergang zwischen dem Speichermedium im Speicher und dem Wärmeträgermedium in den Wärmetauscherrohren.

Sind die Wärmetauscherrohre innerhalb einer Ebene in wenigstens zwei Bereiche unterteilt, wobei in dem zentrumsnahen Bereich ein geringerer Abstand zwischen benachbarten Wärmetauscherrohrwindungen ausgebildet ist als in dem zentrumsfernen Bereich, kann vorteilhaft mehr Energie aus dem zentrumsnahen Bereich entnommen oder zugeführt werden als aus dem zentrumsfernen Bereich. Die Anordnung kühlt bei Wärmeentzug über das Wärmeträgermedium von innen nach außen ab und wärmt sich bei Wärmezufuhr über das Wärmeträgermedium von innen nach außen auf.

Vorzugsweise weisen die Ebenen an einem Ende des Stapels einen geringeren Abstand zueinander auf als an einem diesen gegenüberliegenden Ende. Damit kann vorgegeben werden, an welchem Ende des Stapels mehr Energie oder weniger zugeführt oder entnommen wird, so dass der Stapel in einer vorgegebenen Richtung durch Wärmeentzug über das Wärmeträgermedium abkühlt bzw. durch Wärmezufuhr über das Wärmeträgermedium erwärmt wird.

In einer bevorzugten Ausgestaltung weist der Stapel mit den auf Ebenen angeordneten Wärmetauscherrohren wenigstens bereichsweise ein Zylinderprofil auf. Eine Sprengwirkung beim Abkühlen und Einfrieren des Speichermediums wird wirkungsvoll vermindert.

Bei einem erfindungsgemäßen Verfahren zum Betreiben eines Energiespeichers mit einem inneren ersten Speicher mit einem ersten Speichermedium und einer ersten Wärmetauscheranordnung und einem äußeren, den ersten Speicher umgebenden zweiten Speicher mit einem zweiten Speichermedium, wobei der erste Speicher mit dem zweiten Speicher in Wärmeaustausch steht wird vorgeschlagen, dass der erste und der zweite Speicher während eines ersten Zeitraums als Kältespeicher betrieben werden, wobei Wärmeenergie aus dem ersten und/oder zweiten Speichermedium entnommen wird und während eines zweiten Zeitraums als Wärmespeicher betrieben werden, wobei Kälteenergie aus dem ersten und/oder zweiten Speichermedium entnommen werden kann. Der erste Zeitraum entspricht dabei einer kalten Jahreszeit, beispielsweise Winter, der zweite Zeitraum einer warmen Jahreszeit, beispielsweise Sommer. Vorteilhaft kann damit Kälteenergie zur Kühlung beispielsweise von Räumen entnommen werden, zu deren Erzeugung keine zusätzliche Energie zeitgleich aufgewendet werden muss. Unter "Entnahme von Kälte", "Entnahme von Kälteleistung" oder "Entnahme von Kälteenergie" oder sinngemäße Formulierungen ist die Zufuhr von Wärme zu verstehen, die insbesondere über ein Wärmeträgermedium in die Wärmetauscheranordnungen des ersten und/oder zweiten Speichers eingetragen wird. Die Nutzung der Kälteenergie in der warmen Jahreszeit erzeugt keine Abfallwärme in der warmen Jahreszeit. Wird die Wärme in der kalten Jahreszeit mittels einer Wärmepumpe entnommen, so ist deren Betrieb zur Entnahme der Kälte in der warmen Jahreszeit nicht notwendig. Dies kann günstigerweise stattdessen mit einer einfachen Umwälzpumpe erfolgen.

Als bevorzugtes Speichermedium des ersten Speichers wird ein Speichermedium eingesetzt, das beim Agg regatswechsel latente Wärme abgeben und/oder aufnehmen kann, bevorzugt wird Wasser eingesetzt. Der erste Speicher ist dann thermisch entladen, wenn das Wasser vollständig gefroren ist; dies ist in einer Heizperiode in der kalten Jahreszeit, d.h. in mitteleuropäischen Breiten im Winter, der Fall. Ist der erste Speicher erschöpft, kann durch den Wärmeaustausch mit dem umgebenden zweiten Speicher Energie aus dem zweiten Speicher und dem diesen zweiten Speicher umgebenden Erdreich entnommen werden. Ist der Energiespeicher im Erdreich vergraben, wirkt ein Gehäuse des ersten Speichers als Erdsonde. Der Effekt kann verstärkt werden, wenn eine im zweiten Speicher liegende Wärmetauscheranordnung zugeschaltet wird, um Energie des Erdreichs zu nutzen. Dies bewirkt, dass das Erdreich um den bereits eingefrorenen, thermisch entladenen ersten Speicher herum abgekühlt werden kann. Die entnommene Wärme reicht bei entsprechender Dimensionierung aus, um ein Gebäude bis zum Ende der kalten Jahreszeit zu beheizen. Dazu kann eine Wärmepumpe eingesetzt werden. Vorteilhaft ergibt sich, dass der zweite Speicher als Isolierung für den ersten Speicher dient, dessen Verluste dementsprechend sehr gering sind. Das Erdreich im zweiten Speicher verhält sich wie eine zuschaltbare Isolierung. Mit Beginn des zweiten Zeitraums, d. h. der warmen Jahreszeit, beginnt die Kühlperiode und die gesamte Kälteenergie kann dem Energiespeicher über das die Wärmetauscherrohre durchströmende Wärmeträgermedium entnommen werden. Das Eis schmilzt, das Wasservolumen beginnt sich zu erwärmen, und die in der kalten Jahreszeit entzogene Wärme wird dem Speicher und dem Erdreich zurückgeführt.

Bevorzugt wird der erste Speicher in dem ersten Zeitraum so mit Kälteenergie beaufschlagt, dass dieser vor Ablauf des ersten Zeitraums vollständig thermisch entladen ist. Darunter ist zu verstehen, dass das Speichermedium einen Aggregatswechsel vollständig vollzogen hat, also beispielsweise Wasser zu Eis erstarrt ist. Dann kann der zweite Speicher zugeschaltet oder, falls dieser bereits parallel zum ersten Speicher betrieben wurde, alleine weiter entladen werden. Unter "thermisch laden" ist zu verstehen, dass Wärme dem Speicher zugeführt wird, unter "thermisch entladen" ist zu verstehen, dass Wärme dem Speicher entzogen wird.

In einer vorteilhaften Betriebsweise werden der erste Speicher und der zweite Speicher wenigstens zeitweise seriell thermisch geladen und/oder entladen. Es ist zusätzlich oder alternativ möglich, dass der erste Speicher und der zweite Speicher wenigstens zeitweise parallel thermisch geladen und/oder entladen werden. Damit kann eine Energieentnahme (Wärmeentnahme) und/oder eine Energiezufuhr (Wärmezufuhr) bedarfsabhängig eingestellt werden. Ferner kann eine Optimierung der Auslegung des ersten Speichers erfolgen, bei der der Einfluss des zweiten Speichers zur Reduzierung der Größe des ersten Speichers vorteilhaft berücksichtigt werden kann.

Ein besonders homogener Betrieb zur Energieentnahme und/oder Energiezufuhr ist möglich, wenn eine Vorlaufrichtung und eine Rücklaufrichtung einer Wärmetauscheranordnung umgeschaltet, vorzugsweise periodisch umgeschaltet, werden. Jeweils übereinander liegende Wärmetauscherebenen des ersten und/oder des zweiten Speichers werden entgegengesetzt mit einem Wärmeträgermedium angefahren. Über einer Vorlaufleitung der einen Ebene liegt eine Rücklaufleitung der folgenden Ebene. Damit wird ein gleichmäßiges Durchfrieren oder Auftauen des ersten Speichers bewirkt. Durch ein regelmäßiges Tauschen von Vorlauf und Rücklauf, beispielsweise über Umkehrventile, wird ein gleichmäßiges Wachstum des Eises an den Wärmetauscherrohren erreicht.

Das erfindungsgemäße Energiespeichersystem umfasst einen Energiespeicher mit einem ersten Speicher und einem zweiten Speicher sowie wenigstens eine Wärmepumpeneinrichtung und wenigstens eine speicherexteme Wärmequelle. Beide Speicher des Energiespeichers weisen jeweils eine Wärmetauscheranordnung auf, wobei jeder Speicher mit seiner Wärmetauscheranordnung sowohl mit der Wärmepumpeneinrichtung als auch mit der Wärmequelle verbindbar ist. Dadurch ist es möglich, dass in beiden Speichern gezielt, nämlich über die jeweilige Wärmetauscheranordnung, sowohl Wärme entnehmbar ist, wobei die Speicher abkühlen, als auch Wärme zuführbar ist, wobei die Speicher wieder aufwärmen. Vereinfacht dargestellt ist der Energiespeicher in einer kalten Jahreszeit, beispielsweise im Winter, durch Wärmeentzug einfrierbar und in einer warmen Jahreszeit, beispielsweise im Sommer, durch Zufuhr von Wärme, d.h. Entnahme von Kälte, auftaubar. Der erste Speicher ist als Latentspeicher ausgebildet mit einem Speichermedium, das bei einem Aggregatswechsel latente Wärme aufnehmen bzw. abgeben kann, je nachdem, in welche Richtung der Aggregatswechsel vollzogen wird.

Durch eine geeignete Auslegung der Speicherkapazitäten kann eine über saisonale Heizperioden und/oder Kühlperioden wirtschaftlich vorteilhafte Energieversorgung insbesondere von Gebäuden geschaffen werden. Dabei ist es möglich, bei günstig ausgelegten Speichern kurzfristig auch Kühlleistungen zu entnehmen, die ganz erheblich über der Leistung der Wärmepumpe im Normalbetrieb liegen. Die Erfindung ist besonders für die zentrale Energieversorgung von einzelnen oder mehreren Gebäuden, Messehallen und dergleichen geeignet, bei denen Bedarf an Heizung und Kühlung besteht.

In bevorzugter Ausgestaltung umfasst die Wärmepumpeneinrichtung eine Absorptionswärmepumpe, insbesondere eine Gasabsorptionswärmepumpe. Da diese direkt mit einem Primärenergieträger wie etwa Gas angetrieben wird, ergibt sich im Vergleich zu strombetriebenen Wärmepumpen ein deutlicher Vorteil in der ökologischen Bilanz. Im Gegensatz zu Kompressionsmaschinen allerdings kann eine Absorptionswärmepumpe nur eine Kältemenge liefern, die deutlich geringer ist als eine von ihr lieferbare Wärmemenge. Üblicherweise reicht die Kälteleistung eines einzelnen Wärmepumpenaggregats nicht aus, um neben der Heizleistung in einer winterlichen Heizperiode in einer kalten Jahreszeit auch in einer sommerlichen Kühlperiode in einer warmen Jahreszeit benötigte Kälteleistung bereitzustellen. Ein entscheidender Vorteil der Absorptionswärmepumpe, nämlich ihre geringen Betriebskosten, gerät üblicherweise in den Hintergrund, da im Vergleich zu Kompressionswärmepumpen ein zusätzliches Kälteaggregat notwendig ist, um eine vergleichbare Kälteleistung zu erbringen. Absorptionswärmepumpen werden aus diesem Grund meist nur dann eingesetzt, wenn der Betriebsschwerpunkt beim Heizen liegt. Wird allerdings in bevorzugter Ausgestaltung der Erfindung die Absorptionswärmepumpe mit einem Energiespeicher umfassend einen Latentspeicher kombiniert, kehrt sich der Nachteil der geringen Kälteleistung, auch Entzugsleistung genannt, zum Vorteil um. Da im Vergleich zur Kompressionswärmepumpe nur etwa 50% der Entzugsleistu ng benötigt wird, kann eine Wärmequelle, der die Energie in Form von Wärme entzogen wird, um 50% kleiner ausfallen. Der Latentspeicher muss daher nur etwa halb so groß dimensioniert werden, wie dies bei einer Kombination mit einer Kompressionswärmepumpe der Fall wäre. Einerseits ergibt sich durch die Kombination der Absorptionswärmepumpe mit einem einen Latentspeicher aufweisenden Energiespeicher eine energetisch wie betriebswirtschaftlich sinnvolle Investition, andererseits kann der ursprüngliche Nachteil der geringeren Kälteleistung überkompensiert werden, da die Kälteleistung des Systems um ca. 50% höher liegt als bei einer Kompressionswärmepumpe ohne Speicher. Aus betriebswirtschaftlicher Sicht ist dies ein sinn voller Vergleich, da sich für eine Kompressionswärmepumpe aus Kostengründen an sich nicht der Latentspeicher, sondern ein Erdkollektor, eine Erdsonde ode r dergleichen, anbietet.

Weiterhin kann die Wärmepumpeneinrichtung eine Kompressionswärmepumpe umfassen. Hier kann das erfindungsgemäße Energiespeichersystem auch unter betriebswirtschaftlicher Sicht durchaus vorteilhaft eingesetzt werden, wenn im Verhältnis zur Wärmeleistung eine sehr große Kälteleistung notwendig wird, wie das beispielsweise in Kühlhäusern oder in Eissportstadien der Fall sein kann.

Ferner kann es günstig sein, wenn die Wärmepumpeneinrichtung sowohl eine Absorptionswärmepumpe als auch eine Kompressionswärmepumpe umfasst, um möglichst viele Freiheitsgrade bei der Wärme- und Kälteversorgung von Verbrauchern nutzen zu können. Dies ist insbesondere günstig, wenn das erfindungsgemäße Energiespeichersystem zur Versorgung eines Wohnquartiers mit Wohn- und Geschäftshäusern eingesetzt wird.

Es ist vorteilhaft, wenn der erste Speicher als Latentspeicher sowie der zweite Speicher als Erdkollektor ausgebildet ist. Der Latentspeicher mit Wasser als bevorzugtem Speichermedium kann beim Wechsel des Aggregatzustands des Wassers bei dessen Gefrierpunkt von flüssig nach fest bzw. von fest nach flüssig große Mengen von Wärme aufnehmen bzw. abgeben, ohne dass sich die Temperatur des Speichermedium stark verändert. Die Temperatur des Speichers liegt günstigerweise zwischen knapp unter dem Gefrierpunkt des Wassers (-0°C) und etwas unterhalb von 10°C, insbesondere zwischen -0°C und etwa +8°C. Vorzugsweise ist der Energiespeicher so ausgebildet, wie vorstehend beschrieben wurde.

Weist der erste Speicher eine Speicherkapazität auf, die so bemessen ist, dass vor Ablauf eines ersten Zeitraums, insbesondere der kalten Jahreszeit, zum Entleeren des Energiespeichers der erste Speicher thermisch vollständig entleert ist, kann zusätzlich benötigte Energie aus dem zweiten Speicher entnommen werden. Besonders zweckmäßig ist, wenn die Wärmetauscheranordnung des ersten Speichers Bereiche aufweist, die bedarfsabhängig zuschaltbar oder abschaltbar sind. Dadurch kann eine geringe Dauerleistung an Wärme oder Kälte entnommen werden und für eine Spitzenbetrieb die entnehmbare Wärme oder insbesondere Kälte drastisch erhöht werden, ohne dass die Größe des Energiespeichers bzw. des ersten Speichers verändert werden muss. Bevorzugt sind dazu wenigstens zwei Gruppen von Wärmetauscherrohren vorgesehen, wobei die erste Gruppe für den Normalbetrieb vorgesehen ist und die zweite Gruppe bei Mehrbedarf zuschaltbar ist. Ein Faktor der verfügbaren Leistung zwischen Normalbetrieb und Spitzenbetrieb ist praktisch nur von die Dichte und/oder Anzahl der Wärmetauscherrohre abhängig.

Umgibt der zweite Speicher den ersten Speicher wenigstens bereichsweise, kann dieser vorteilhaft Energie, sei es Wärme oder Kälte an den ersten Speicher abgeben. Der zweite Speicher kann auch als eine Art zuschaltbare Isolierung des ersten Speichers angesehen werden, was dazu führt, dass im ersten Speicher Wärme vorteilhafterweise praktisch verlustfrei gespeichert werden kann. Ist eine Grundwasserberührung des Energiespeichers, insbesondere des zweiten, als Erdkollektor ausgebildeten Speichers, möglich, ist dies energetisch vorteilhaft, jedoch für die Funktion des Energiespeichers nicht ausschlaggebend. Ebenso ist es nicht notwendig, den Energiespeicher so tief in das Erdreich einzulassen, dass er unterhalb der Frostgrenze des Erdreichs angeordnet werden kann. Dies erspart Kosten bei der Installation des Energiespeichers, da ein Erdaushub dann wesentlich weniger aufwändig du rchgeführt werden kann.

Vorzugsweise ist zur Entnahme von Kälte aus dem Energiespeicher eine Umwälzpumpe vorgesehen. Unter "Entnahme von Kälte" und sinngemäßen Formulierungen ist jeweils eine Zufuhr von Wärme in den Speicher zu verstehen, insbesondere über das Wärmeträgermedium. Auf einen Betrieb der Wärmepumpeneinrichtung in der Kühlperiode in der warmen Jahreszeit kann verzichtet werden, ihr Betrieb in der Heizperiode der kalten Jahreszeit ist ausreichend. Die Kälte kann lediglich mittels der Umwälzpumpe aus dem kalten Energiespeicher in einen zu kühlenden Bereich transportiert werden. Dies bedeutet, dass zur Nutzung von Kälteleistung in der warmen Jahreszeit, etwa im Sommer, keine zusätzliche Energie eingesetzt und keine Abwärme an die Umwelt abgegeben werden muss.

In einer günstigen Weiterbildung sind Umschaltmittel vorgesehen, um eine Vorlauf und einen Rücklauf der ersten und/oder zweiten Wärmetauschereinrichtung umzuschalten. Eine derartige Umschaltung dient einer homogeneren Ausnutzung des Energiespeichers, was den Energieübertrag zwischen Speichermedium und Wärmeträgermedium der Wärmetauscheranordnung verbessert. Zusätzlich ist die Wärmetauscheranordnung bevorzugt des ersten Speichers so ausgebildet, dass dieser zuverlässig von innen nach außen und axial gerichtet, insbesondere von unten nach oben einfriert und wieder auftaut.

Bei dem erfindungsgemäßen Verfahren zum Betreiben eines Energiespeichersystems mit einem Energiespeicher umfassend einen ersten und einen zweiten Speicher sowie mit wenigstens einer Wärmepumpeneinrichtung und wenigstens einer Wärmequelle ist vorgesehen, dass in einem ersten Zeitraum einem oder mehreren vom Energiespeichersystem versorgten Verbrauchern entzogene Wärme als Heizleistung in einem zweiten Zeitraum verwendet wird.

Beim Kühlen von Gebäuden und/oder Anlagen und sonstigen Verbrauchern entzogene Wärme kann praktisch verlustfrei über Monate im Energiespeicher gespeichert werden, bis die gespeicherte Wärme zu Heizzwecken wieder benötigt wird.

Üblicherweise nutzt eine Wärmepumpe zu einem Teil die Wärme einer Wärmequelle, beispielsweise die Umwelt, Räume in einem Gebäude und dergleichen, zum Heizen. Die Wärmequelle wird dabei abgekühlt. Eine auch für Kühlzwecke geeignete Wärmepumpe gibt die etwa den Räumen entnommene Wärme an die Umgebungsluft ab, welche dabei aufgewärmt wird. In der kalten Jahreszeit, etwa im Winter, entzieht die Wärmepumpe der Umgebung Energie und kühlt diese ab, in der warmen Jahreszeit, etwa im Sommer, führt sie der Umgebung Energie zu und erwärmt diese. Es handelt sich dabei jeweils um den nicht nutzbaren Energieanteil eines Wärmepumpenprozesses und damit um ein thermisches Abfallprodukt. Die Erfindung ermöglicht es, diesen bislang weitgehend ungenutzten Energieteil nutzbar zu machen.

Der erste Zeitraum ist eine saisonale Kühlperiode (warme Jahreszeit) und der zweite Zeitraum eine saisonale Heizperiode (kalte Jahreszeit), kann im Übermaß anfallende Wärme in der warmen Jahreszeit für die kalte Jahreszeit gespeichert werden, während in der warmen Jahreszeit eine Kühlung aus dem Energiespeicher erfolgen kann, der in der vorhergehenden kalten Jahreszeit abgekühlt, insbesondere eingefroren wurde. So dauert in Mitteleuropa eine winterliche Heizperiode, in der geheizt wird, typischerweise 5 Monate, während eine sommerliche Kühlperiode, in der gekühlt wird, entsprechend 7 Monate dauert.

Der Energiespeicher wird saisonal wechselnd entweder als Kältespeicher oder als Wärmespeicher betrieben.

Eine besonders günstige Betriebsweise besteht darin, dass der erste Speicher so entladen wird, dass dieser vor Ablauf des ersten Zeitraums vollständig thermisch entladen ist. Der zweite Energiespeicher kann die fehlende Kühlleistung oder Wärmeleistung dem Energieversorgungssystem zur Verfügung stellen. Ist der erste Speicher als Latentspeicher und der zweite Energiespeicher als Erdkollektor ausgebildet, kann der zweite Speicher auf den Energieinhalt des Erdreichs zurückgreifen. Dadurch ist eine vorteilhaft kompakte Auslegung des Energiespeichers möglich.

Es kann vorgesehen sein, dass der erste Speicher und der zweite Speicher wenigstens zeitweise seriell geladen und/oder entladen werden. Dabei wird un ter "Laden" verstanden, dass Wärme zugeführt wird und, bei Wasser als Speichermedium des ersten Speichers, Eis aufgetaut wird. Unter "Entladen" ist zu verstehen, dass Wärme abgeführt wird und das erste Speichermedium beispielsweise zu Eis erstarrt. Vorzugsweise liegt die Temperatur des entladenen Speichers bei etwas unterhalb des Gefrierpunkts von Wasser, etwa -0°C, und die des geladenen Speichers etwas unter +10°C, vorzugsweise bei +8°C. Alternativ kann der erste Speicher und der zweite Speicher wenigstens zeitweise parallel geladen und/oder entladen werden. Damit kann eine Wärmemenge oder Kältemenge bedarfsgerecht verfügbar gemacht werden. Bei einer Auslegung des Energiespeichers kann eine Größe des ersten Speichers unter Berücksichtigung der zusätzlichen Leistung des zweiten Speichers entsprechend kleiner ausgelegt werden.

Wird eine Vorlaufrichtung und eine Rücklaufrichtung einer Wärmetauschereinrichtung des Energiespeichers periodisch umgeschaltet, kann die Effizienz des Energiespeichers durch einen daraus folgenden besseren Energieübertrag erhöht werden.

Die Bauweise heutiger Gebäude geht tendenziell verstärkt in die Richtung, dass die Kühllast im Verhältnis zum Wärmebedarf immer größer wird. Große Glasflächen und Leichtbauweise unterstützen diesen Trend. Das bedeutet, dass bei Wärmepumpen bzw. einem Klimatisierungssystem oder einem Energiespeichersystem eine möglichst große Kälteleistung immer wichtiger wird.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1 a, b: einen Längsschnitt durch eine erste bevorzugte Ausgestaltung einer Wärmetauscheranordnung mit Zylinderprofil (a) und eine zweite bevorzugte Ausgestaltung einer Wärmetauscheranordnung mit Halbkugelprofil (b) eines Energiespeichers nach der Erfin dung,
- Fig. 2: eine Draufsicht auf den Energiespeicher aus Figur 1 a bzw. 1 b mit einer Wärmetauscheranordnung eines ersten Speichers und einer Wärmetauscheranordnung eines den ersten Speicher umgebenden zweiten Speichers,
- Fig. 3: schematisch einen Stapel von Ebenen mit Wärmetauscherrohren einer bevorzugten Wärmetauscheranordnung,
- Fig. 4: schematisch den Aufbau eines bevorzugten Energiespeichersystems,
- Fig. 5: einen Ausschnitt einer Anordnung eines bevorzugtes Energiespeichersystems in Verbindung mit einem Gebäude.

### Beschreibung der Ausführungsbeispiele

Im Wesentlichen gleich bleibende Teile sind in den Figuren grundsätzlich mit den gleichen Bezugszeichen beziffert.

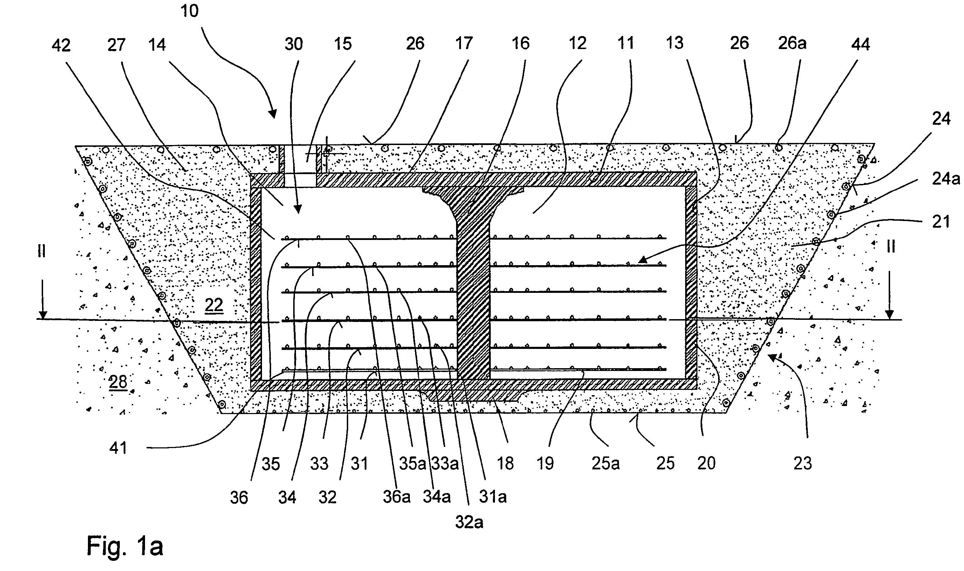

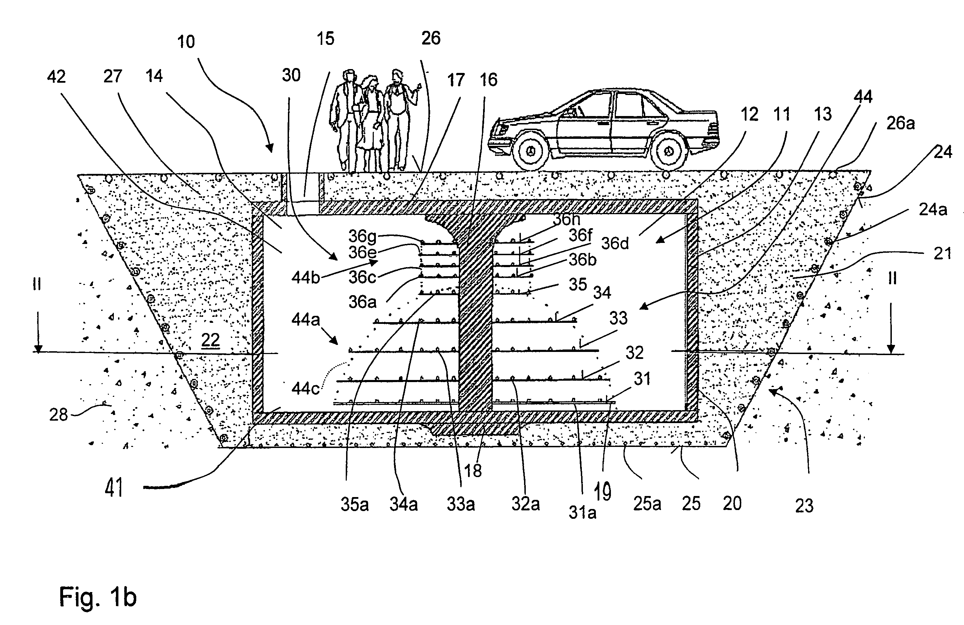

Die Figuren 1 a und 1 b zeigt je einen Längsschnitt durch eine bevorzugte Ausgestaltung eines erfindungsgemäßen Energiespeichers 10 mit einem inneren ersten Speicher 11 mit einem ersten Speichermedium 12 sowie einer ersten Wärmetauscheranordnung 30 und einem äußeren, den ersten Speicher 11 umgebenden zweiten Speicher 21 mit einem zweiten Speichermedium 22. Der erste Speicher 11 weist ein Gehäuse 13 auf und ist nicht gegen den zweiten Speicher 21 isoliert, sondern steht mit dem zweiten Speicher 21 in Wärmeaustausch.

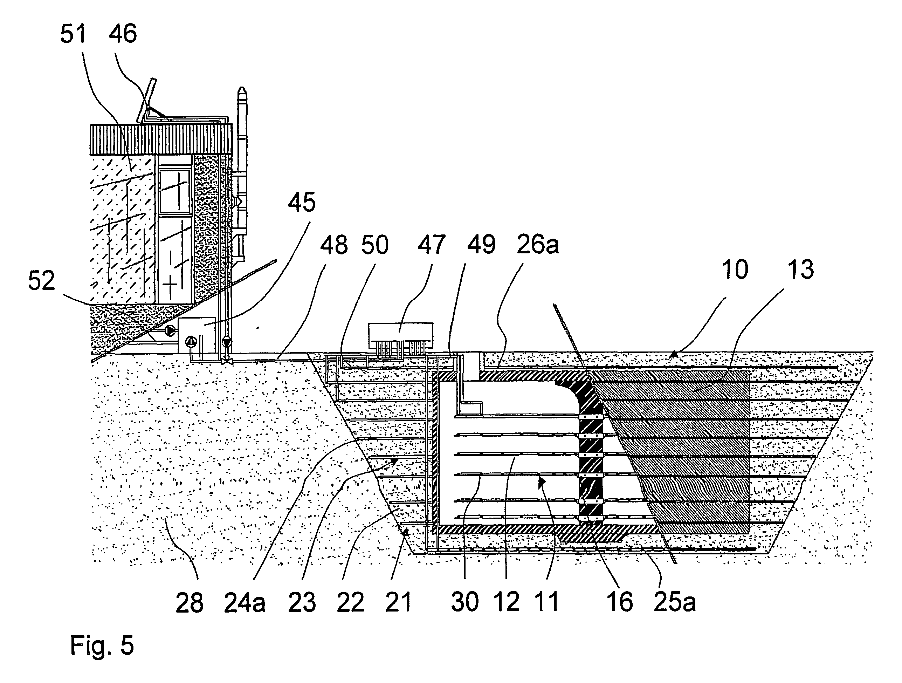

Der zweite Speicher 21 weist eine zweite Wärmetauscheranordnung 23 auf, die den ersten Speicher 11 umgibt, die jedoch nicht im Detail dargestellt ist. Weitere zeichnerische Details dazu können der Figur 5 entnommen werden. In einem unteren Bereich 25 der zweiten Wärmetauscheranordnung 23 ein Wärmetauscherrohr 25a als horizontale Lage unterhalb des Gehäuses 13 angeordnet. In einem seitlichen Bereich 24 umgibt ein Wärmetauscherrohr 24a das Gehäuse 13 vertikal an dessen Seitenwänden 20. In einem oberen Bereich 26 ist eine horizontale Lage der Wärmetauscheranordnung 23 mit einem Wärmetauscherrohr 26a oberhalb eines Deckels 17 des Gehäuses 13 angeordnet. Zwischen der Wärmetauscheranordnung 23 und dem Gehäuse 13 ist Erdreich als Speichermedium des zweiten Speichers 21 angeordnet. Das bevorzugte Speichermedium 12 des ersten Speichers 11 ist Wasser. Die Wärmetauscherrohre 24a, 25a, 26a sind in konzentrischen Windungen angeordnet, wobei die Wärmetauscherrohre 24a, 25a, 26a im unteren und oberen Berech 25, 26 einlagig und im seitlichen Bereich 24 schräg, nämlich radial und axial zueinander beabstandet, angeordnet sind.

Von seiner Speicherkapazität ist der erste Speicher 11 so bem essen, dass er vor Ablauf des ersten Zeitraums, insbesondere einer Heizperiode in der kalten Jahreszeit, thermisch vollständig entladen ist und etwa 50% der in dem ersten Zeitraum benötigten Energie, insbesondere Wärme, liefert. Das als Wasser ausgebildete Speichermedium 12 liegt dann vollständig als Eis mit einer Temperatur von etwas unter 0°C (-0°C) vor. Den restlichen Bedarf kann der zweite Speicher 21 decken, indem dieser parallel zu oder seriell mit dem ersten Speicher 11 betrieben wird. Der zweite Speicher 21 kann auch lediglich zeitweise zugeschaltet werden, während der erste Speicher 11 noch geladen ist.

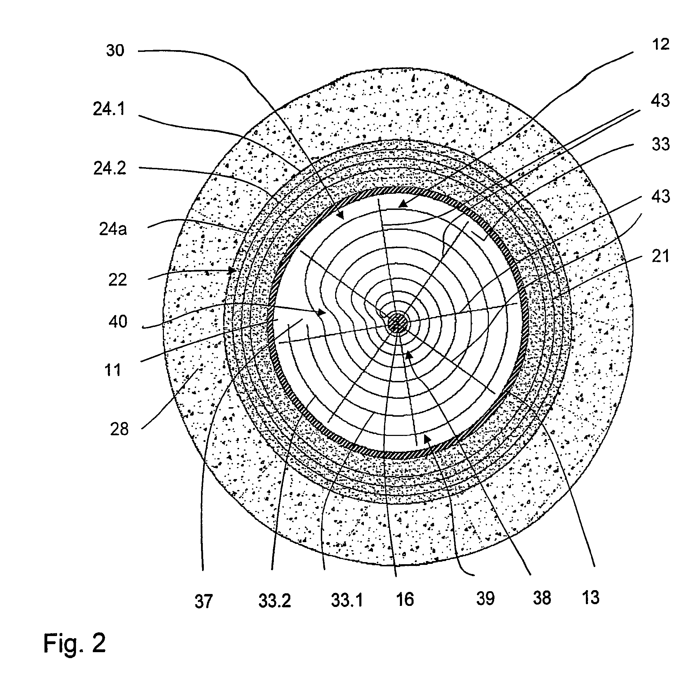

Das Gehäuse 13 des ersten Speichers 11 ist als Hohlzylinder ausgebildet und weist ein Bodenteil 19, Wände 20 sowie einen Deckel 17 auf. Der Durchmesser des Hohlzylinders ist so groß, insbesondere größer als etwa 8 m, dass der Deckel 17 auf einer zentralen Strebe 16 lagert, die im Bodenteil 19 mit einer Verstärkung 18 gestützt ist. Bei kleineren Durchmessern kann eine solche Strebe 16 entfallen. Der Deckel 17 ist ausreichend stabil, um befahrbar zu sein. Im Deckel 17 ist eine Öffnung 15 erkennbar, durch welche beispielsweise ein Monteur eine Wärmetauscheranordnung 30 in das Volumen 14 des Gehäuses einbringen kann. Nach der Montage der Wärmetauscheranordnung 30 kann der erste Speicher 11 mit seinem Speichermedium 12 gefüllt werden. Das Gehäuse 13 ist vorzugsweise aus Beton gebildet. Wie in Figur 2 näher erläutert wird, liegen in der Wärmetauscheranordnung 30 warm und kalt nebeneinander, vorzugsweise sowohl horizontal als auch vertikal.

Figur 1a illustriert eine erste Ausgestaltung der Wärmetausch eranordnung 30 in zylindrischer Form. Für Wärmetauscherrohre 31a, 32a, 33a, 34a, 35a, 36a der Wärmetauscheranordnung 30 ist eine nicht dargestellte Öffnung im Gehäuse 13, bevorzugt in dessen Deckel 17 vorgesehen, um diese nach außen zu führen.

Die erste Wärmetauscheranordnung 30 ist so in dem Gehäuse 13 angeordnet, dass eine Wärmeentnahme und/oder eine Wärmezufuhr im Wesentlichen von innen nach außen und von unten nach oben erfolgt. Dazu weist die erste Wärmetauscheranordnung 30 aus einem zylindrischen Stapel 44 einer Mehrzahl von übereinander liegenden Ebenen 31, 32, 33, 34, 35, 36 auf, die mit den einlagigen Wärmetauscherrohren 31a, 32a, 33a, 34a, 35a, 36a versehen sind.

Das jeweilige Wärmetauscherrohr 31 a, 32a, 33a, 34a, 35a, 36a ist in seiner jeweiligen Ebene 31, 32, 33, 34, 35, 36 im Wesentlichen in konzentrischen Windungen angeordnet, wobei die Windungen zentrums nah einen geringeren Abstand zueinander aufweisen als zentrumsfern. Weiterhin weisen die Ebenen 31, 32, 33, 34, 35, 36 im unteren Bereich 41 nahe des Bodenteils 19 einen geringeren Abstand auf als im Bereich 42 des Deckels 17.

Figur 1b illustriert eine bevorzugte zweite Ausgestaltung der Wärmetauscheranordnung 30, bei der der Stapel 44 in zwei Bereiche 44a und 44b unterteilt ist. Die sonstige Ausgestaltung entspricht derjenigen in Figur 1 a. Die Ebenen 31, 32, 33, 34, 35 mit ihren Wärmetauscherrohren 31 a, 32a, 33a, 34a, 35a sind im bodennahen Bereich 44a so angeordnet, dass sie ein Halbkugelprofil 44c ergeben. Auf der durchmesserkleinsten Ebene 35 setzt der zweite Bereich 44b auf, der wieder ein Zylinderprofil aufweist mit Ebenen 36b, 36d, 36f, 36h und den darin verlaufenden jeweiligen Wärmetauscherrohren 36a, 36c, 36e, 36g.

Der Vorteil des Halbkugelprofils ist darin zu sehen, dass beim Einfrieren des Speichermediums 12, vorzugsweise Wasser, sich eine aus Eis gebildete Halbkugel bildet, die nach außen und nach oben auch über die Wärmetauscheranordnung 30 wachsen kann. Das Halbkugelprofil ist auch in seinem Innern mit Wärmetauscherrohren 31 a, 32a, 33a, 34a, 35a versehen, so dass sich beim Vereisen zuerst eine komplett durchgefrorene Halbkugel bildet. Beim weiteren Wärmeentzug wächst diese weiter und friert gleichmäßig das gesamte, mit dem Speichermedium 12 gefüllte und insgesamt zylindrische Volumen 14 ein. Die zunächst gebildete Halbkugel entspricht einem Kern. Aus diesem Kern heraus wächst das Eis gleichmäßig weiter. Das Auftreten einer Sprengwirkung ist ausgeschlossen, da sich die Halbkugel von unten nach oben und von innen nach außen gleichmäßig ausdehnt.

Mit der Stärke des Eises wächst auch der thermische Widerstand gegen den Wärmefluss durch das Eis. Das Eiswachstum verlangsamt sich, und ab einem gewissen Punkt wächst das Eis nicht mehr. Dieser Effekt ist beim flächigen Eiswachstum am größten, da sich die Oberfläche mit wachsender Eisschicht nicht vergrößert.

Das zylindrische Eiswachstum um die Wärmetauscherrohre 31a, 32a, 33a, 34a, 35a, 36a, die im Ausführungsbeispiel nach Figur 1a auftritt, kann diesen Effekt im Vergleich zu einem Flächenwachstum bei bekannten Anordnungen bereits deutlich abschwächen. Hierbei wächst die Oberfläche linear mit der Eisstärke an. Die halbkugelförmige Ausgestaltung nach Figur 1b kann darüber hinaus den negativen Effekt weiter reduzieren, da die Oberfläche einer Kugel quadratisch mit dem Radius wächst. Auf diese Weise kann das gesamte Speichervolumen 14 durchfrieren, ohne dass sich die Erhöhung des Widerstands beim Einfrieren, bedingt durch die Eisstärke, merklich auswirkt.

Da das Halbkugelprofil 44c im Verhältnis zur Ausgestaltung nach Figur 1a bezogen auf das gesamte Volumen 14 des ersten Speichers 11 weniger Wärmetauscher enthält, wird das Halbkugelprofil 44c vorteilhaft mit dem senkrechten, zylindrischen Bereich 44b, vorzugsweise bis an die Grenze Wasser/Eisoberfläche, kombiniert. Dieser Bereich 44b erhöht die gesamte Oberfläche der Wärmetauscheranordnung 30 ohne ein Risiko bezüglich einer möglichen Sprengwirkung darzustellen. Darüber hinaus wirkt sich der zylindrische Bereich 44b beim Einfrieren und Auftauen vorteilhaft aus, da sich innerhalb des Zylinders ein thermischer Auftrieb und/oder Abtrieb entwickelt, der sich wiederum positiv auf den Einfrier- und Auftauvorgang auswirkt.

Eine beispielhafte Größe des ersten Speichers 11 des Energiespeichers 10 liegt bei einem Volumen 14 von etwa 150 000 Litern Wasser als Speichermedium 12 für ein Gebäude, dessen geschätzter Heizbedarf über das Jahr mit typischerweise etwa 1 800 Stunden Betriebszeit der Heizeinrichtung bei etwa 72 000 kWh liegt und das mit einer Wärmepumpe mit einer typischen Heizleistung von 40 kW versorgt wird. Der Wärmeinhalt der 150 000 Liter des Speichermediums 12 liegt mit einer typischen Temperaturspreizung zwischen +8°C und -0°C bei etwa 15 300 kWh. Dies entspricht auch der nach der Heizperiode im Speicher 11 gebundenen Energie in Form von Eis und kaltem Wasser bei einer Temperaturspreizung von -0°C (Eis) bis +8°C, und kann während der warmen Jahreszeit zu Kühlzwecken genutzt werden. Diese Energiemenge steht, da sie ein Abfallprodukt der kalten Jahreszeit darstellt, im Energiespeicher 10 kostenlos und ohne weiteren Energieaufwand für Kühlzwecke zur Verfügung, abgesehen von dem für Umwälzpumpen benötigten elektrischen Strom von wenigen hundert Watt.

Die Wärmepumpe und/oder ein Kälteaggregat können über die warme Jahreszeit komplett ausgeschaltet bleiben. Wird eine besonders hohe Kälteleistung verlangt, kann das Aggregat oder die Wärmepumpe jederzeit zugeschaltet werden.

Durch eine geeignete Wärmetauscheranordnung 30, 23 können auf Wunsch kurzfristige Spitzenentzugsleistungen realisiert werden, deren Größe nur von der Wärmetauscherfläche im ersten und zweiten Speicher 11, 21 abhängt.

Figur 2 zeigt eine Draufsicht auf den Energiespeicher 10 aus Figur 1 a bzw. 1 b mit einer Wärmetauscheranordnung 30 eines ersten Speichers 11 innerhalb eines Gehäuses 13 und ei ner Wärmetauscheranordnung 23 eines den ersten Speicher 11 umgebenden zweiten Speichers 21. Ein U-förmiges Wärmetauscherrohr 33a ist in als einlagige Wicklung auf einer speichenradähnlichen Basis mit Trägern 43 gelagert, von denen nur einige mit dem Bezugszeichen beziffert sind, und bildet eine einzelne Ebene 33 der Wärmetauscheranordnung 30 aus Figur 1 a bzw. 1 b. Nebeneinander liegende Windungen des Wärmetauscherrohrs 33a sind konzentrisch um eine Strebe 16 gewunden. Einer der Schenkel des U-förmigen Wärmetauscherrohrs 33a bildet einen Vorlauf 33.1 und der andere der Schenkel einen Rücklauf 33.2 für ein Wärmeträgermedium, wobei in der Ebene 33 jeweils abwechselnd der Vorlauf 33.1 neben einem Rücklauf 33.2 liegt. Im zentrumsnahen Bereich 38 sind die Windungen enger gelegt als im zentrumsfernen Bereich 39. An dem zentrumsfernen Endstück 37 wird das Wärmetauscherrohr 33a nach oben aus der Ebene 33 und aus dem Energiespeicher 10 (Figur 1 a bzw. 1 b) geführt, was nicht dargestellt ist. In einem radialen Bereich 40 sind Übergänge der Windungen des Wärmetauscherrohrs 33a von einer Windung zur anderen zu erkennen. Der Bereich 40 ist auf einen relativ engen Winkelbereich begrenzt und mit weichen Übergängen von einer Windung zur nächsten ausgeführt. Zwischen den Windungen des Wärmetauscherrohrs 33a ist ein Speichermedium 12 in Kontakt mit diesen.

Bei der Montage der Wärmetauscheranordnung 30 kann diese durch eine schmale Öffnung in das Gehäuse 13 eingebracht werden. Die speichenradähnliche Basis umfasst acht als Stangen ausgebildete Träger 43, die einzeln durch die Öffnung 15 (Figur 1a bzw. 1 b) transportiert und die beispielsweise an einer zentralen Strebe 16 vorzugsweise drehbar angebracht werden können und wie Speichen von der Strebe 16 radial weg stehen. Zweckmäßigerweise sind die Träger 43 mit einer Art Muffe an der Stütze 16 befestigt, die gegen eine axiale Verschiebung gesichert ist, aber eine Drehung um die Strebe 16 ermöglicht. Günstigerweise ist die speichenradähn liche Basis zur Montage des jeweiligen des Wärmetauscherrohrs 31 a, 32a, 33a₋ 34a, 35a, 36a in einer Montageposition nahe der Öffnung 15 arretierbar. Dann kann das vorzugsweise als Kunststoffschlauch ausgebildete Wärmetauscherrohr 33a radial von innen nach außen in einer Mehrzahl von Windungen auf die als Stangen ausgebildeten Träger 43 geklemmt werden, vorzugsweise darauf festgeclipst werden. Dabei kann eine Stange nach der anderen an der Öffnung 15 vorbeigedreht werden. Ist die Basis mit den Windungen des Wärmetauscherrohrs 33a fertig belegt, kann die Basis nach unten in ihre Endposition abgesenkt werden und die Stangen der nächsten Basis eingebracht werden. Die Basis kann auch aus Trägersegmenten bestehen, die beispielsweise aus einem Gitter gebildet sind. Ebenso kann die ganze Basis ganzflächig aus einem Gitter bestehen.

Die Wärmetauscheranordnung 23 des zweiten Speichers 21 kann insbesondere im oberen Bereich 26 und im unteren Bereich 25 in der für die Wärmetauscheranordnung 30 des ersten Speichers 11 beschriebenen konzentrischen Anordnung (Figur 1 a bzw. 1 b) ausgebildet sein. Denkbar ist jedoch auch eine Ausgestaltung in der Art einer Matte, bei der die entsprechenden Wärmetauscherrohre 25a, 26a nicht konzentrisch oder kreisförmig, sondern in Wellen oder dergleichen geführt sind.

Das Gehäuse 13 ist von der zweiten Wärmetauscheranordnung 23 des zweiten Speichers 21 umgeben. Es sind Windungen eines Wärmetauscherrohrs 24a zu erkennen, die radial und axial zueinander versetzt und im Wesentlichen konzentrisch um das Gehäuse 13 angeordnet sind. Auch hier liegen ein Vorlauf 24.1 und Rücklauf 24.2 abwechselnd nebeneinander. Zwischen den Windungen des Wärmetauscherrohrs 24a und dem Gehäuse 13 ist Erdreich als Speichermedium 22 angeordnet.

Es sind zeichnerisch nicht dargestellte Schaltmittel vorgesehen, um einzelne Ebenen 31, 32, 33, 34, 35, 36, ebenso wie die Wärmetauscherrohre 24a, 25a, 26a der Bereiche 24, 25, 26 von einer Wärmeträgerdurchströmung zu trennen und/oder mit einer Wärmeträgerdurchströmung zu beaufschlagen. Ebenso kann vorgesehen sein, dass in einzelnen oder allen Ebenen 31, 32, 33, 34, 35, 36 und/oder Bereichen 24, 25, 26 der Wärmetauscheranordnung en 30, 23 jeweils zu den Wärmetauscherrohren 31 a, 32a, 33a, 34a, 35a, 36a, 24a , 25a, 26a ein oder mehrere zusätzliche Wärmetauscherrohre angeordnet sind, die bedarfsweise zugeschaltet oder abgeschaltet werden können.

Erfindungsgemäß werden der erste und der zweite Speicher 11, 21 während eines ersten Zeitraums als Kältespeicher betrieben, wobei Wärmeenergie aus dem ersten und/oder zweiten Speichermedium 12, 22 entnommen wird und während eines zweiten Zeitraums als Wärmespeicher betrieben werde n, wobei Kälteenergie aus dem ersten und/oder zweiten Speichermedi um 12, 22 entnommen wird. Der erste Speicher 11 wird bevorzugt vor Ablauf des ersten Zeitraums vollständig entladen. Dabei kann der erste Speicher 11 und der zweite Speicher 21 wenigstens zeitweise seriell geladen und/oder entladen werden. Alternativ kann der erste Speicher 11 und der zweite Speicher 21 wenigstens zeitweise parallel geladen und/oder entladen werden.

Eine Vorlaufrichtung und eine Rücklaufrichtung einer Wärmetauscheranordnung 30, 23 kann periodisch umgeschaltet werden, um eine möglichst homogene Temperaturverteilung und damit einen guten Energietransfer in das oder aus dem Speichermedium 12, 22 zu erreichen.

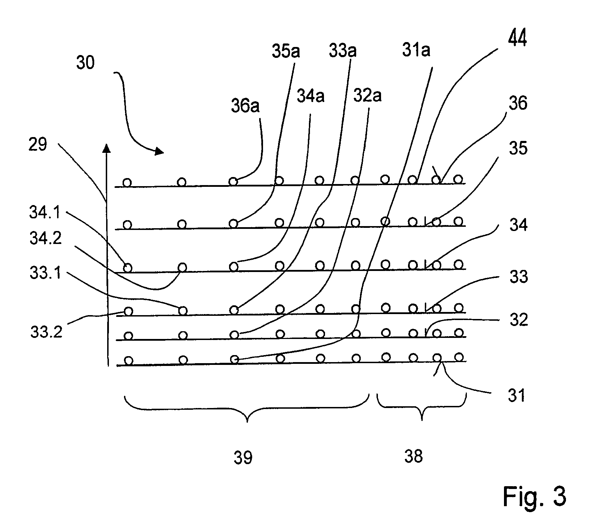

Figur 3 illustriert einen Längsschnitt durch einen Stapel 44 von aufeinander folgenden Ebenen 31, 32, 33, 34, 35, 36 mit einer Stapelrichtung 29, wobei jeweils ein Vorlauf 33.1, 34.1 über und/oder unter einem Rücklauf 34.2, 34.2 angeordnet ist, wobei beispielhaft und der Übersichtlichkeit wegen nur Vorlauf 33.1, 34.1 und Rücklauf 33.2, 34.2 zweier Ebenen 33, 34 hervorgehoben sind. Die einzelnen Ebenen 31, 32, 33, 34, 35, 36 sind insbesondere so ausgestaltet, wie in der Figur 2 dargestellt ist und weisen in einem Bereich 38 einen geringeren Abstand zueinander auf als in einem Bereich 39. Die Ebenen 31, 32, 33, 34, 35, 36 weisen an einem Ende 41 des Stapels 44 einen geringeren Abstand zueinander auf als an einem diesen gegenüberliegenden Ende 42. Dadurch kann eine Richtung vorgegeben werden, in der der Stapel 44 sich erwärmt bzw. abkühlt, und zwar in der Figur in Stapelrichtung 29 von unten nach oben und von bereich 38 zu Bereich 39 hin.

Die Wärmetauscherrohre 31a, 32a, 33a, 34a, 35a, 36a der verschiedenen Ebenen 31, 32, 33, 34, 35, 36 sind strömungstechnisch parallel geschaltet und von einem Wärmeträgermedium parallel durchströmbar. Jede einzel ne Ebene 31, 32, 33, 34, 35, 36 ist unabhängig von den anderen durchströmbar und kann insbesondere bedarfsweise durchströmt oder nicht durchströmt werden. In jeder Ebene 31, 32, 33, 34, 35, 36 kann mehr als ein Wärmetauscherrohr 31 a, 32a, 33a, 34a, 35a, 36a angeordnet sein, wobei einzelne davon ebenfalls bedarfsweise durchströmbar oder nicht durchströmbar sein können. Es kann selbstverständlich auch eine kleinere oder größere Anzahl als die Ebenen 31, 32, 33, 34, 35, 36 vorgesehen sein.

Die Wärmetauscherrohre 31 a, 32a, 33a, 34a, 35a, 36a sind vorzugsweise aus Kunststoff, insbesondere aus Polyethylen, gebildet.

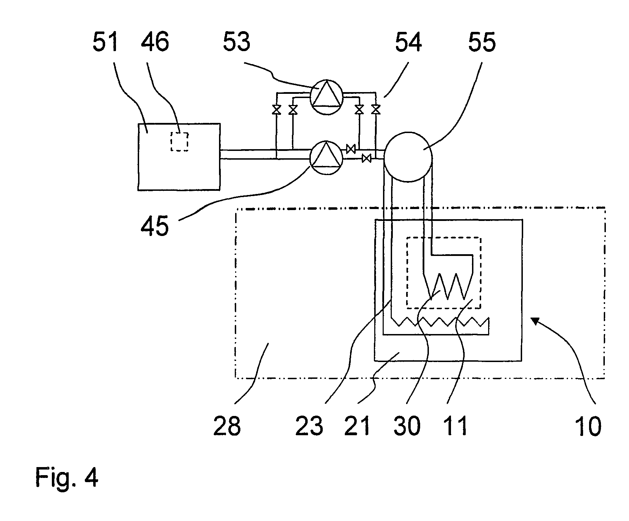

In Figur 4 ist schematisch ein Energiespeichersystem mit einem Energiespeicher 10 mit einem ersten Speicher 11 und einem zweiten Speicher 21 sowie mit wenigstens einer Wärmepumpeneinrichtung 45 und wen igstens einer speicherexternen Wärmequelle 46 dargestellt. Es sind jedoch verschiedene Arten von Energiespeichern denkbar. Die Verwendung des bevorzugten Energiespeichers 10, wie er in der Figur 1 a bzw. 1 b dargestellt ist, stellt jedoch eine besonders bevorzugte Ausgestaltung des erfindungsgermäßen Energiespeichersystems dar. Der Energiespeicher 10 gemäß Figur 1 a bzw. 1 bist an dieser Stelle ausdrücklich mit eingeschlossen. Zur Vermeidung unnötiger Wiederholungen wird auf die Beschreibung des Energiespeichers 10 in Figur 1 a bzw. 1 b verwiesen.

Der erste Speicher 11 des Energiespeichers 10 weist eine ersten Wärmetauschereinrichtung 30, der zweite Speicher 21 eine zweite Wärmetauschereinrichtung 23 auf. Jeder Speicher 11 und 21 ist sowohl mit der Wärmepumpeneinrichtung 45 als auch mit der Wärmequelle 46 verbindbar. Ein übliches Wärmeträgermedium zirkuliert in den Wärmetausch ereinrichtungen 30, 23 und transportiert Wärme oder Kälte zu einem oder mehre ren Verbrauchern 51 und/oder Wärmequellen 46. Der Verbraucher 51 ist vorzugsweise ein Gebäude, eine Gebäudekomplex umfassend mehrere Einzelgebäude, eine Anlage wie ein Kühlhaus oder eine Eissporthalle und dergleichen, während die Wärmequelle 46 als Solarkollektor ausgebildet sein kann oder ein sonstiges Aggregat, dessen Wärme in den Energiespeicher 10 geleitet werden soll. Die Wärme kann auch Abwärme sein. Die Wärmequelle 46 steht nicht nur für ein einziges Element, sondern es können eine Mehrzahl, auch unterschiedlicher, Wärme erzeugender Komponenten darunter verstanden werden.

Der Energiespeicher 10 ist im Erdreich 28 vergraben. Der zweite Speicher 21 umgibt den ersten Speicher 11. Bevorzugt ist der erste Speicher 11 als Latentspeicher und der zweite Speicher 21 als Erdkollektor ausgebildet. Aus dem Energiespeicher 10 ist in einem ersten Zeitraum, beispielsweise einer Heizperiode in einer kalten Jahreszeit, Wärme entnehmbar ("Kälte zufüh rbar"), die über die Wärmepumpeneinrichtung 45 auf ein für einen Verbraucher 51 günstiges Niveau angehoben werden kann. Dabei kühlt der Energiespeicher 10 ab. Die gespeicherte Kälte kann in einer Kühlperiode einer darauf folgenden warmen Jahreszeit entnommen werden, indem beispielsweise warme Raumluft abgekühlt wird.

Zusätzlich zur Wärmepumpeneinrichtung 45 ist eine Umwälzpumpe 53 vorgesehen. In einem Betriebszustand, in dem Kälte aus dem Energiespeicher 10 für Kühlzwecke entnommen werden soll, ist die Wä rmepumpeneinrichtung 45 zweckmäßigerweise nicht in Betrieb, und das Wärmeträgermedium der Wärmetauschereinrichtungen 30, 23 wird mittels der Umwälzpumpe 53 zwischen Verbraucher 51, Wärmequelle 46 und Energiespeicher 10 gefördert. Soll nur die Umwälzpumpe 43 betrieben werden, sind nicht näher ausgeführte Ventile 54 in geeigneter Weise vorgesehen.

Die Wärmepumpeneinrichtung 45 kann eine oder mehrere Wärmepumpen umfassen, wie etwa eine Gasabsorptions-Wärmepumpe und/oder eine Kompressions-Wärmepumpe.

Der erste Speicher 11 und der zweite Speicher 21 können zeitweise parallel und/oder zeitweise seriell geladen und entladen werden. Eine Umschaltung oder Zuschaltung des einen oder anderen Speichers 11 , 21 erfolgt mittels als geeignete Ventile ausgebildete Umschaltmitteln 55, die nicht näher detailliert sind.

Eine vorteilhafte Ausgestaltung einen Ausschnitt ei ner Anordnung eines bevorzugten Energiespeichersystems in Verbindung mit einem als Gebäude ausgebildeten Verbraucher 51 ist aus Figur 5 ersichtlich. Bezüglich gleich bleibender Merkmale und Funktionen wird auf die Beschreibung zur Figur 4 verwiesen.

Ein erster Speicher 11 des Energiespeichers 10 weist eine Wärmetascheranordnung 30 auf, bei der nicht näher bezeichnete Wärmetauscherrohre in Ebenen übereinander angeordnet sind. Als Speichermedium 12 ist Wasser bevorzugt. Ein zweiter Speicher 21 umgibt den ersten Speicher 11 mit seiner Wärmetauschereinrichtung 23 von allen Seiten. Als dessen Speichermedium 22 ist Erdreich bevorzugt. Dessen Wärmetauscherrohre 24a, 25a, 26a umgeben den ersten Speicher 11 von der Seite, von unten und von oben. Der erste Speicher 11 ist in einem allseits geschlossenen Gehäuse 13 angeordnet, das bei Bedarf mit einer Strebe 16 mittig abgestützt ist, um dem Gehäuse 13 eine ausreichende Tragfähigkeit zu verleihen. Dies bietet die Möglichkeit, den Energiespeicher nahe einem Gebäude, beispielsweise unter einer Straße oder unter einem Parkplatz zu vergraben. Die Strebe 16 kann entfallen, wenn aus statischen Gründen darauf verzichtet werden kann.

Der erste Speicher 11 weist vorzugsweise eine Speicherkapazität auf, die so bemessen ist, dass vor Ablauf eines ersten Zeitraums zum Entleeren des Energiespeichers 10, zweckmäßigerweise in einer Heizperiode in der kalten Jahreszeit, der erste Speicher 11 vollständig thermisch entleert ist. Dies bedeutet, dass der Aggregatswechsel vollständig abgeschlossen ist. Bei Wasser als Speichermedium 12 liegt dieses vollständig als Eis vor. Beim Auftauen, d.h. beim thermischen Laden, muss erst eine große Energiemenge zum Auftauen zugeführt werden, bevor sich das Speichermedium über die Temperatur, bei dem der Aggregatswechsel erfolgt, also beispielsweise den Gefrierpunkt des Wassers, erwärmt.

Eine Wärmepumpeneinrichtung 45 wird zum Wärmeentzug mit Wärmeträgermedium des ersten und/oder zweiten Speichers 11, 21 beaufschlagt, das mit Leitungen 49 aus dem ersten Speicher 11 und mit Leitungen 50 aus dem zweiten Speicher 21 zu und von der Wärmepumpeneinrichtung 45 transportiert wird und von dort über Leitungen 48 zu einem als Gebäude ausgebildeten Verbraucher 51 gelangt. Eine als Solarkollektor ausgebildete Wärmequelle 46 kann Wärme in die Leitungen 48 oder an eine anderen, geeigneten Stelle einbringen. In den Leitungen 48, 49, 50 und den angeschlossenen Wärmetauschereinrichtungen 30, 23 zirkuliert ein übliches Wärmeträgermedium. Zweckmäßigerweise sind nicht näher dargestellte Umschaltmittel vorgesehen, um einen Vorlauf und einen Rücklauf der ersten und/oder zweiten Wärmetauschereinrichtung 30, 23 umzuschalten, womit die Temperatur innerhalb des Energiespeichers 10 homogenisiert wird und der Energieübertrag zwischen Wärmeträgermedium und Speichermedium 12, 22 verbessert wird.

Ist die Wärmepumpeneinrichtung 45 als Absorptionswärmepumpe, insbesondere eine Gasabsorptionswärmepumpe, ausgebildet, kann, wie vorne bereits ausgeführt wurde, deren ursprünglicher Nachteil einer geringen Kälteleistung oder Entzugsleistung in Kombination mit dem als Latentspeicher ausgebildeten ersten Speicher 11 sogar so überkompensiert werden, dass bei gleichzeitiger Nutzung der Absorptionswärmepumpe und des als Latentspeicher ausgebildeten Speichers 11 die Kälteleistung des Systems um etwa 50% höher liegt als die einer Kompressionswärmepumpe ohne Speicher 11.

Die höhere Kälteleistung des Systems Latentspeicher-Absorptionswärmepumpe erklärt sich anhand des folgenden Beispiels. Geht man von einem als Bürogebäude ausgebildeten Verbraucher 51 mit einem Wärmebedarf von 40 kW aus, so kann die Kühllast durchaus mit ca. 32 kW angenommen werden. Diese Leistungsdaten entsprechen etwa denen einer Kompressionswärmepumpe, so dass mit einem einzigen solchen Gerät somit der Heizbedarf und der Kältebedarf dieses Bürogebäudes erbracht werden können. Die durchschnittliche Laufzeit einer Heizungsanlage in Deutsch land liegt bei etwa 1 800 Stunden/Jahr, die einer Klimaanlage bei etwa 500 Stunden/Jahr, jeweils unter Volllast berechnet. Bezogen auf eine Kompressionswärmepumpe ergibt sich, dass die in der warmen Jahreszeit, also etwa im Sommer, zum Kühlen zu entziehende Wärmemenge bei 500 Stunden x 32 kW, also bei 16 000 kWh liegt.

Sollte für das Bürogebäude eine von der Heizleistung vergleichbare Absorptionswärmepumpe zum Einsatz kommen, könnte diese die benötigten 40 kW Heizleistung erbringen, aus physikalischen Gründen aber nur etwa 17,5 kW Kälteleistung zur Verfügung stellen, was einer dem Bürogebäude zu entziehenden Wärmemenge von 8 750 kWh entspricht.

Kombiniert man aber gemäß einer bevorzugten Ausgestaltung der Erfindung die Absorptionswärmepumpe mit dem Latentspeicher, entzieht sie diesem bei einer Laufzeit in der kalten Jahreszeit von 1 800 Stunden eine Wärmemenge von 31 500 kWh. Die Entzugsleistung wird regelungstechnisch vorzugsweise so verteilt, dass etwa 15 300 kWh dem ersten Speicher 11, der den Speicherkern des Energiespeichers 10 bildet, und in Form von Eis als "Kälte" gespeichert wird. Der Rest, die fehlenden 16 200 kWh, werden dem Erdreich mittels des als Erdkollektor ausgebildeten zweiten Speichers 21 des Energiespeichers 10 entnommen. Da auch ein Teil der im als Erdreich ausgebildeten Speichermedium 22 und gegebenenfalls auch im Erdreich 28 gespeicherten Kälte bis zur darauf folgenden warmen Jahreszeit überdauert, kann der Energiespeicher 10 in Verbindung mit dem ihn umgebenden Volumen die eingangs geforderte Kühllast des Bürogebäudes in Höhe von 16 000 kWh komplett abdecken. Hierbei ist zu beachten, dass diese Kälteleistung bei ausgeschalteter Absorptionswärmepumpe ausschließlich durch die im Energiespeicher 10 enthaltene Kälte erbracht wird. Antriebsenergie in Form von Gas oder elektrischem Strom ist nicht erforderlich. Es genügt die elektrische Umwälzpumpe 53 mit geringer elektrischer Anschlussleistung, um die Kälte aus dem Energiespeicher 10 in dem als Bürogebäude ausgebildeten Verbraucher 51 zu verteilen und diesen somit zu kühlen.

Bei Bedarf kann die Absorptionswärmepumpe zugeschaltet werden, was die Leistung des Systems Energiespeicher-Absorptionswärmepumpe um deren eingangs erwähnte Kälteleistung von 17,5 kW erhöht und somit, bezogen auf 500 Stunden Laufzeit der Kühlperiode, bei 48,1 kW liegt. Damit ist die Leistung um über 50% höher als die einer Kompressionswärmepumpe mit etwa 32 kW Kälteleistung. Der Wert ergibt sich aus dem Energieinhalt, die der Energiespeicher zwischen -0°C und +8°C enthält. Dies sind 15 300 kWh, die als nutzbare Kälte entnommen werden können. Bei 500 h Laufzeit in der Kühlperiode der warmen Jahreszeit ergibt sich eine Dauerleistung von 30,6 kW, wobei die Summe 48,1 kW ergibt.

Zur Dimensionierung des Energiespeichesystems ist weiterhin zu berücksichtigen, dass die Absorptionswärmepumpe noch 25 kW für ihren Gasbrenner benötigt, bei einem Wirkungsgrad von 90% und rund 0,5 kW elektrische Leistung als Hilfsenergie.

Die nach der Heizperiode der kalten Jahreszeit im Energiespeicher 10 gebundene Energie in Form von Eis und kaltem Wasser beträgt bei einer Temperaturspreizung von -0°C bis +8°C ca. 15 300 kWh, welche in der warmen Jahreszeit als nutzbare Kälte zu Kühlzwecken zur Verfügung steht. Sofern diese Energiemenge größer ist als die benötigte Entzugsenergie zum Kühlen des Bürogebäudes, kann dem Energiespeichersystem bei Bedarf noch Wärme von anderen Wärmequellen 46 zugeführt werden, um zu Beginn der kalten Jahreszeit thermisch geladen zu sein.

Bei dem erfindungsgemäßen Verfahren zum Betreiben eines Energiespeichersystems mit einem Energiespeicher 10 umfassend einen ersten und einen zweiten Speicher 11, 21 sowie mit wenigstens einer Wärmepumpeneinrichtung 45 und wenigstens einer Wärmequelle 46 wird somit in einem ersten Zeitraum einem oder mehreren vom Energiespeichersystem 10 versorgten Verbrauchern 51 entzogene Wärme als Heizleistung in einem zweiten Zeitraum verwendet.

Anstelle der Energiequelle "Umwelt" wird der im Erdreich 28 vergrabene, als Latentspeicher, insbesondere Wasserspeich er ausgebildete erste Speicher 11 als Energiequelle verwendet. Wenn dieser in der kalten Jahreszeit als Quelle für Wärme genutzt wird, wird ihm über die Wärmepumpeneinrichtung 45 die Wärme entzogen und der Speicher 11 somit thermisch entladen. Dieser thermische Entladevorgang wird so lange betrieben, bis das Wasser den Gefrierpunkt unterschritten hat und somit einfriert. In Figur 1a bzw. 1 b ist ein besonders bevorzugter Energiespeicher 10 beschreiben, der ein möglichst homogenes Einfrieren und Auftauen ermöglicht. Auf die Beschreibung des Energiespeichers 10 wird hier verwiesen.

Bedingt durch den Zustandswechsel von flüssig auf fest wird der Latentwärmeeffekt von Wasser/Eis genutzt und die Speicherkapazität somit stark vergrößert. Das in der kalten Jahreszeit entstandene Eis kann in der warmen Jahreszeit zur Kühlung genutzt werden.

Der erste Speicher 11 ist vorzugsweise so dimensioniert, dass zum Zeitpunkt des kompletten Einfrierens sicher die kalte Jahreszeit noch nicht vorbei ist und weiterhin Heizbedarf besteht. Da es aber weder technisch noch wirtschaftlich Sinn macht, das nunmehr komplett vereiste Volumen 14 (Figur 1 a bzw. 1 b) noch weiter abzukühlen, steht der zweite Speicher 21 als weitere, vom ersten Speicher 11 unabhängige Energiequelle zur Verfügung. Dabei können der erste Speicher 11 und der zweite Speicher 21 wenigstens zeitweise seriell geladen und/oder entladen werden und/oder der erste Speicher 11 und der zweite Speicher 21 wenigstens zeitweise parallel geladen und/oder entladen werden.

Der erste Zeitraum ist zweckmäßigerweise eine saisonale Kühlperiode und der zweite Zeitraum eine saisonale Heizperiode. Der Energiespeicher 10 wird demnach saisonal wechselnd entweder als Kältespeicher oder als Wärmespeicher betrieben. Der als Latentspeicher ausgebildete erste Speicher 11 wird so dimensioniert, dass zum Zeitpunkt des Endes der kalten Jahreszeit der erste Speicher 11 sicher thermisch entladen ist.

Die Wärmepumpeneinrichtung 45 und/oder ein nicht dargestelltes Kälteaggregat können über die warme Jahreszeit komplett ausgeschaltet bleiben. Wird eine besonders hohe Kälteleistung verlangt, kann die Wärmepumpeneinrichtung 45 jederzeit zugeschaltet werden.

Durch eine geeignete Wärmetauscheranordnung 30, 23ersten und zweiten Speichers 11, 21 des Energiespeichers 10 können auf Wunsch kurzfristige Spitzenentzugsleistungen realisiert werden, deren Größe nur von der Wärmetauscherfläche im ersten und zweiten Speicher 11, 21 abhängt.

Da die in der kalten Jahreszeit dem Energiespeicher 10 entnommene Wärmeleistung in der mitteleuropäischen Klimazone deutlich höher ist als die in der warmen Jahreszeit in den Energiespeicher 10 zurückgeführte Wärmeleistung (entspricht der benötigten Kälteleistung), würde sich über das Jahr ein energetischen Ungleichgewicht im Energiespeicher 10 einstellen. Da die Energiedifferenz auch durch den natürlichen Eintrag über die Umweltwärme nicht ausgeglichen werden kann, muss dem Energiespeicher 10 in der warmen Jahreszeit zusätzliche Energie zugeführt werden, damit dieser zu Beginn der Heizperiode komplett aufgetaut und möglichst warm ist.

Mit dem Energiespeicher 10 und dem ihn umgebenden Erdreich 22, 28 steht damit ein Wärmespeicher zur Verfügung, der in der warmen Jahreszeit üblicherweise im Überfluss vorhandene überschüssige Wärme beispielsweise aus Solaranlagen, Blockheizkraftwerken und dergleichen nahezu verlustfrei speichern kann.

Um den Eiskern nicht vor Ende der warmen Jahreszeit bereits abzuschmelzen, wird die Wärme nicht in den Energiespeicher 10 direkt, sondern in die um die ersten Speicher 11 liegende Wärmetauscheranordnung 23 geführt. Dies lässt das Erdreich 22, 28 von nahe dem Gefrierpunkt auf Temperaturen oberhalb der durchschnittlichen Erdreichtemperatur ansteigen. Das Erdreich 22, 28 kann somit als erweiterter Wärmespeicher genutzt werden. Der Energieeintrag wird erfindungsgemäß so gesteuert, dass sich bis zum Ende der warmen Jahreszeit das notwendige Energiegleichgewicht eingestellt hat und der Energiespeicher 10 ausreichend Wärme für die anstehende kalte Jahreszeit bereitstellen kann.

### Bezugszeichen

- 10: Energiespeicher
- 11: Erster Speicher
- 12: Speichermedium
- 13: Gehäuse
- 14: Volumen
- 15: Öffnung
- 16: Strebe
- 17: Deckel
- 18: Verstärkung
- 19: Bodenteil
- 20: Wand
- 21: Zweiter Speicher
- 22: Speichermedium
- 23: Wärmetauscheranordnung
- 24: seitlicher Bereich
- 24a: Wärmetauscherrohr
- 24.1: Vorlauf
- 24.2: Rücklauf
- 25: unterer Bereich
- 25a: Wärmetauscherrohr
- 26: oberer Bereich
- 26a: Wärmetauscherrohr
- 27: Volumen
- 28: Erdreich
- 29: Stapelrichtung
- 30: Wärmetauscheranordnung
- 31: Ebene
- 31a: Wärmetauscherrohr
- 31.1: Vorlauf
- 31.2: Rücklauf
- 32: Ebene
- 32a: Wärmetauscherrohr
- 33: Ebene
- 33a: Wärmetauscherrohr
- 33.1: Vorlauf
- 33.2: Rücklauf
- 34: Ebene
- 34a: Wärmetauscherrohr
- 35: Ebene
- 35a: Wärmetauscherrohr
- 36: Ebene
- 36a: Wärmetauscherrohr
- 36b: Ebene
- 36c: Wärmetauscherrohr
- 36d: Ebene
- 36e: Wärmetauscherrohr
- 36f: Ebene
- 36g: Wärmetauscherrohr
- 36h: Ebene
- 37: Endstück
- 38: Bereich
- 39: Bereich
- 40: Bereich
- 41: unteres Ende
- 42: oberes Ende
- 43: Träger
- 44: Stapel
- 44a: bodennaher Bereich
- 44b: Bereich
- 44c: Halbkugelprofil
- 45: Wärmepumpeneinrichtung
- 46: Wärmequelle
- 47: Sammler
- 48: Leitung
- 49: Leitung
- 50: Leitung
- 51: Gebäude
- 52: Leitung
- 53: Umwälzpumpe
- 54: Ventile
- 55: Umschaltmittel

## Patentansprüche

1. Energiespeicher mit einem inneren ersten Speicher (11) mit einem ersten Speichermedium (12) und einer ersten Wärmetauscheranordnung (30) und einem äußeren, den ersten Speicher (11) umgebenden zweiten Speicher (21) mit einem zweiten Speichermedium (22) und einer zweiten Wärmetauscheranordnung (23), wobei das zweite Speichermedium (22) Erdreich umfasst,
**dadurch gekennzeichnet, dass** der erste Speicher (11) als Latentspeicher ausgebildet ist und die erste Wärmetauscheranordnung (30) einen Stapel (44) aus einer Mehrzahl von übereinander liegenden, in einer Stapelrichtung (29) axial beabstandeten Ebenen (31, 32, 33, 34, 35, 36, 36b, 36d, 36f, 36h) mit konzentrisch gewundenen Wärmetauscherrohren (31 a, 32a, 33a, 34a, 35a, 36a, 36c, 36e, 36g) umfasst, wobei jeweils in den Ebenen (31, 32, 33, 34, 35, 36, 36b, 36d, 36f, 36h) radial neben einem Vorlauf (33.1) ein Rücklauf (33.2) der Wärmetauscherrohre (31a, 32a, 33a, 34a, 35a, 36a, 36c, 36e, 36g) angeordnet ist und bezogen auf aufeinander folgende Ebenen (31, 32, 33, 34, 35, 36, 36b, 36d, 36f, 36h) jeweils ein Vorlauf (31.1, 32.1) über und/oder unter einem Rücklauf (31.2, 32.2) der Wärmetauscherrohre (31 a, 32a, 33a, 34a, 35a, 36a, 36c, 36e, 36g) angeordnet ist und die Wärmetauscherrohre (31 a, 32a, 33a, 34a, 35a, 36a, 36c, 36e, 36g) innerhalb einer Ebene in wenigstens zwei Bereiche (38, 39) unterteilt sind, wobei in dem zentrumsnahen Bereich (38) ein geringerer Abstand zwischen benachbartem Vorlauf (33.1) und Rücklauf (33.2) der Wärmetauscherrohre (31 a, 32a, 33a, 34a, 35a, 36a, 36c, 36e, 36g) ausgebildet ist als in dem zentrumsfernen Bereich (39).

2. Energiespeicher nach Anspruch 1, **dadurch gekennzeichnet, dass** der erste Speicher (11) eine Speicherkapazität aufweist, die so bemessen ist, dass vor Ablauf eines ersten Zeitraums, in dem der erste Speicher (11) als Kältespeicher arbeitet, der erste Speicher (11) vollständig thermisch entladen ist.

3. Energiespeicher nach Anspruch 2, **dadurch gekennzeichnet, dass** die Speicherkapazität so bemessen ist, dass der erste Speicher (11) etwa nach der Hälfte des ersten Zeitraums entladen ist.

4. Energiespeicher nach einem der vorhergehenden Ansprüche, **dadurch gekennzeichnet, dass** das erste Speichermedium (12) in einem starren Gehäuse (13) gespeichert ist.

5. Energiespeicher nach Anspruch 4, **dadurch gekennzeichnet, dass** das Gehäuse (13) als Hohlzylinder ausgebildet ist.

6. Energiespeicher nach Anspruch 4 oder 5, **dadurch gekennzeichnet, dass** die erste Wärmetauscheranordnung (30) so in dem Gehäuse (13) angeordnet ist, dass ein Abkühlen und/oder Aufwärmen im Wesentlichen von innen nach außen und axial in einer vorgegebenen Richtung erfolgt.

7. Energiespeicher nach einem der vorhergehenden Ansprüche, **dadurch gekennzeichnet, dass** die zweite Wärmetauscheranordnung (23) Wärmetauscherrohre (24a, 25a, 26a) umfasst, die unter und/oder neben und/oder über dem Gehäuse (13) angeordnet sind.

8. Energiespeicher nach einem der vorhergehenden Ansprüche, **dadurch gekennzeichnet, dass** die Wärmetauscherrohre (24a, 25a, 26a, 31 a, 32a, 33a, 34a, 35a, 36a, 36c, 36e, 36g) der verschiedenen Ebenen (31, 32, 33, 34, 35, 36, 36b, 36d, 36f, 36h) strömungsmäßig so parallel geschaltet sind, dass sie von einem Wärmeträgermedium parallel durchströmbar sind.

9. Energiespeicher nach Anspruch 8, **dadurch gekennzeichnet, dass** Schaltmittel vorgesehen sind, um einzelne Ebenen (31, 32, 33, 34, 35, 36, 36b, 36d, 36f, 36h) und/oder Wärmetauscherrohre (24a, 25a, 26a, 31 a, 32a, 33a, 34a, 35a, 36a, 36c, 36e, 36g) von einer Wärmeträgermediendurchströmung zu trennen und/oder mit einer Wärmeträgermediendurchströmung zu beaufschlagen.

10. Verfahren zum Betreiben eines Energiespeichers (10) nach einem der Ansprüche 1-9, **dadurch gekennzeichnet, dass** das erste Speichermedium (12) unter Freisetzung oder Aufnahme von latenter Wärme seinen Aggregatszustand ändert, so dass der erste und der zweite Speicher (11, 21) saisonal wechselnd in einem ersten Zeitraum als Kältespeicher, wobei Wärmeenergie zu Heizzwecken aus dem ersten und/oder zweiten Speichermedium (12, 22) entnommen wird, oder in einem zweiten Zeitraum als Wärmespeicher betrieben werden, wobei Kälteenergie zu Kühlzwecken aus dem ersten und/oder zweiten Speichermedium (12, 22) entnommen wird, wobei der erste Speicher (11) vor Ablauf des ersten Zeitraums vollständig thermisch entladen wird und wobei ein Abkühlen und/oder Aufwärmen des ersten Speichermediums (12) durch die Wärmetauscheranordnung (30) im Wesentlichen von innen nach außen und axial in einer vorgegebenen Richtung erfolgt.

11. Verfahren nach Anspruch 10, **dadurch gekennzeichnet, dass** der erste Speicher (11) etwa nach der Hälfte des ersten Zeitraums vollständig thermisch entladen wird.

12. Verfahren nach Anspruch 10 oder 11, **dadurch gekennzeichnet, dass** der erste Speicher (11) und der zweite Speicher (21) wenigstens zeitweise seriell geladen und/oder entladen werden.

13. Verfahren nach Anspruch 11 oder 12, **dadurch gekennzeichnet, dass** der erste Speicher (11) und der zweite Speicher (21) wenigstens zeitweise parallel geladen und/oder entladen werden.

14. Verfahren nach einem der Ansprüche 10 bis 13, **dadurch gekennzeichnet, dass** eine Vorlaufrichtung und eine Rücklaufrichtung einer Wärmetauscheranordnung (30, 23) periodisch umgeschaltet werden.

15. Verfahren nach einem der Ansprüche 10 bis 14, **dadurch gekennzeichnet, dass** Wärmetauscherrohre (24a, 25a, 26a, 31 a, 32a, 33a, 34a, 35a, 36a, 36c, 36e, 36g; 24a, 25a, 26a) bedarfsabhängig zugeschaltet und/oder abgeschaltet werden.

16. Energiespeichersystem mit einem Energiespeicher (10) nach wenigstens einem der Ansprüche 1 bis 9, sowie mit wenigstens einer Wärmepumpeneinrichtung (45) und wenigstens einer speicherexternen Wärmequelle (46) und/oder einem Kälteaggregat, **dadurch gekennzeichnet, dass** jeder Speicher (11, 21) mit seiner Wärmetauschereinrichtung (30, 23) sowohl mit der Wärmepumpeneinrichtung (45) und/oder dem Kälteaggregat als auch mit der Wärmequelle (46) so verbindbar ist, dass die Wärmetauschereinrichtung (30, 23) in einem ersten Zeitraum mit der Wärmepumpeneinrichtung (45) und/oder dem Kälteaggregat und in einem zweiten Zeitraum mit der Wärmequelle (46) verbunden ist, und wobei der erste Speicher (11) eine Temperatur aufweist, die meistens unterhalb der des Erdreichs (28) liegt, so dass aus dem Erdreich (28) um den Energiespeicher (10) herum Energie in Form von Wärme nachfließen kann.

17. Energiespeichersystem nach Anspruch 16, **dadurch gekennzeichnet, dass** die Wärmepumpeneinrichtung (45) eine Absorptions-Wärmepumpe umfasst.

18. Energiespeichersystem nach Anspruch 16 oder 17, **dadurch gekennzeichnet, dass** die Wärmepumpeneinrichtung (45) eine Kompressions-Wärmepumpe umfasst.

19. Energiespeichersystem nach einem der Ansprüche 16 bis 18, **dadurch gekennzeichnet, dass** der erste Speicher (11) eine Speicherkapazität aufweist, die so bemessen ist, dass vor Ablauf eines ersten Zeitraums zum Entleeren des Energiespeichers (10) der erste Speicher (11) vollständig entleert ist.

20. Energiespeichersystem nach einem der Ansprüche 16 bis 19, **dadurch gekennzeichnet, dass** zur Entnahme von Kälte aus dem Energiespeicher (10) eine Umwälzpumpe (53) vorgesehen ist.

21. Energiespeichersystem nach einem der Ansprüche 16 bis 20, **dadurch gekennzeichnet, dass** Umschaltmittel vorgesehen sind, um einen Vorlauf (33.1, 24.1) und einen Rücklauf (33.2, 24.2) der ersten und/oder zweiten Wärmetauschereinrichtung (30, 23) umzuschalten.

22. Verfahren zum Betreiben eines Energiespeichersystems nach wenigstens einem der Ansprüche 16 bis 21 **dadurch gekennzeichnet, dass** der Energiespeicher (10) saisonal wechselnd entweder als Kältespeicher oder als Wärmespeicher betrieben wird, wobei in einem Zeitraum einem oder mehreren vom Energiespeichersystem (10) versorgten Verbrauchern entzogene Wärme als Heizleistung in einem anderen Zeitraum verwendet wird, und wobei der erste Speicher (11) eine Temperatur aufweist, die meistens unterhalb der des Erdreichs (28) liegt, so dass aus dem Erdreich (28) um den Energiespeicher (10) herum Energie in Form von Wärme nachfließen kann, wobei der erste Speicher (11) vor Ablauf des ersten Zeitraums vollständig thermisch entladen wird und wobei ein Abkühlen und/oder Aufwärmen des ersten Speichermediums (12) durch die Wärmetauscheranordnung (30) im Wesentlichen von innen nach außen und axial in einer vorgegebenen Richtung erfolgt.

23. Verfahren nach Anspruch 22, **dadurch gekennzeichnet, dass** der erste Speicher (11) etwa nach der Hälfte des ersten Zeitraums vollständig thermisch entladen wird.

24. Verfahren nach Anspruch 22 oder 23, **dadurch gekennzeichnet, dass** der erste Speicher (11) und der zweite Speicher (21) wenigstens zeitweise seriell geladen und/oder entladen werden.

25. Verfahren nach einem der Ansprüche 22 bis 24, **dadurch gekennzeichnet, dass** der erste Speicher (11) und der zweite Speicher (21) wenigstens zeitweise parallel geladen und/oder entladen werden.

26. Verfahren nach einem der Ansprüche 22 bis 25, **dadurch gekennzeichnet, dass** eine Vorlaufrichtung und eine Rücklaufrichtung einer Wärmetauschereinrichtung (30, 23) des Energiespeichers (10) periodisch umgeschaltet werden.

27. Wärmetauscheranordnung eines Energiespeichers (10) nach einem der Ansprüche 1-9, mit einem ersten Speicher (11) mit einem ersten Speichermedium (12), wobei das erste Speichermedium (12) Wasser ist, das eingefroren und aufgetaut wird, mit einem Stapel (44) aus einer Mehrzahl von übereinander liegenden, in einer Stapelrichtung (29) axial beabstandeten Ebenen (31, 32, 33, 34, 35, 36, 36b, 36d, 36f, 36h) mit konzentrisch gewundenen Wärmetauscherrohren (31a, 32a, 33a, 34a, 35a, 36a, 36c, 36e, 36g), **dadurch gekennzeichnet, dass** jeweils in den Ebenen (31, 32, 33, 34, 35, 36, 36b, 36d, 36f, 36h) radial neben einem Vorlauf (33.1) ein Rücklauf (33.2) der Wärmetauscherrohre (31a, 32a, 33a, 34a, 35a, 36a, 36c, 36e, 36g) angeordnet ist und bezogen auf aufeinander folgende Ebenen (31, 32, 33, 34, 35, 36, 36b, 36d, 36f, 36h) jeweils ein Vorlauf (31.1, 32.1) über und/oder unter einem Rücklauf (31.2, 32.2) der Wärmetauscherrohre (31 a, 32a, 33a, 34a, 35a, 36a, 36c, 36e, 36g) angeordnet ist, wobei die Wärmetauscherrohre (31 a, 32a, 33a, 34a, 35a, 36a, 36c, 36e, 36g) innerhalb einer Ebene in wenigstens zwei Bereiche (38, 39) unterteilt sind, wobei in dem zentrumsnahen Bereich (38) ein geringerer Abstand zwischen benachbarten Wärmetauscherrohren (31 a, 32a, 33a, 34a, 35a, 36a, 36c, 36e, 36g) ausgebildet ist als in dem zentrumsfernen Bereich (39).

28. Wärmetauscheranordnung nach Anspruch 27, **dadurch gekennzeichnet, dass** der Stapel (44) wenigstens bereichsweise ein Zylinderprofil (44b) aufweist.

29. Wärmetauscheranordnung nach Anspruch 27 oder 28, **dadurch gekennzeichnet, dass** der Stapel (44) wenigstens bereichsweise ein Halbkugelprofil (44a) aufweist.

30. Wärmetauscheranordnung nach einem der Ansprüche 27 bis 29, **dadurch gekennzeichnet, dass** wenigstens eine der Ebenen (31, 32, 33, 34, 35, 36, 36b, 36d, 36f, 36h) eine speichenradähnliche Basis umfasst, auf welcher eine jeweilige Wicklung der Wärmetauscherrohre (31 a, 32a, 33a, 34a, 35a, 36a, 36c, 36e, 36g) befestigt ist.

31. Wärmetauscheranordnung nach einem der Ansprüche 30, **dadurch gekennzeichnet, dass** die speichenradähnliche Basis zur Montage der jeweiligen der Wärmetauscherrohre (31a, 32a, 33a, 34a, 35a, 36a, 36c, 36e, 36g) in einer Montageposition arretierbar ist.

32. Wärmetauscheranordnung nach einem der Ansprüche 30 bis 31, **dadurch gekennzeichnet, dass** die speichenradähnliche Basis nach der Montage der jeweiligen der Wärmetauscherrohre (31 a, 32a, 33a, 34a, 35a, 36a, 36c, 36e, 36g) in eine Speicherposition axial verschiebbar ist.

33. Wärmetauscheranordnung nach einem der Ansprüche 27 bis 32, **dadurch gekennzeichnet, dass** die Ebenen (31, 32, 33, 34, 35, 36, 36b, 36d, 36f, 36h) an einem Ende (41) des Stapels (44) einen geringeren Abstand zueinander aufweisen als an einem diesen gegenüberliegenden Ende (42).

## Claims

1. Energy accumulator with an internal first accumulator (11) with a first storage medium (12) and a first heat exchanger arrangement (30), and an external second accumulator (21) surrounding the first accumulator (11) and with a second storage medium (22) and a second heat exchanger arrangement (23), where the second storage medium (22) comprises earth,
**characterized in that** the first accumulator (11) is designed as a latent accumulator and the first heat exchanger arrangement (30) comprises a stack (44) of a plurality of planes (31, 32, 33, 34, 35, 36, 36b, 36d, 36f, 36h) positioned one above the other and axially apart in one stacking direction (29) with concentrically spiral heat exchanger pipes (31a, 32a, 33a, 34a, 35a, 36a, 36c, 36e, 36g), where in each plane (31, 32, 33, 34, 35, 36, 36b, 36d, 36f, 36h) a return line (33.2) of the heat exchanger pipes (31 a, 32a, 33a, 34a, 35a, 36a, 36c, 36e, 36g) is arranged radially next to a supply line (33.1) and a supply line (31.1, 32,1) is arranged above and/or below a return line (31.2, 32.2) of the heat exchanger pipes (31a, 32a, 33a, 34a, 35a, 36a, 36c, 36e, 36g) relative to consecutive planes (31, 32, 33, 34, 35, 36, 36b, 36d, 36f, 36h), and the heat exchanger pipes (31 a, 32a, 33a, 34a, 35a, 36a, 36c, 36e, 36g) within one plane are divided into at least two areas (38, 39), where in the area (38) close to the center a shorter distance between the adjacent supply line (33.1) and the return line (33.2) of the heat exchanger pipes (31a, 32a, 33a, 34a, 35a, 36a, 36c, 36e, 36g) is provided than in the area (39) further from the center.

2. Energy accumulator according to Claim 1, **characterized in that** the first accumulator (11) has an accumulator capacity dimensioned such that before expiry of a first period in which the first accumulator (11) operates as a cold accumulator the first accumulator (11) is completely thermally discharged.

3. Energy accumulator according to Claim 2, **characterized in that** the accumulator capacity is dimensioned such that the first accumulator (11) is discharged after about half of the first period.

4. Energy accumulator according to one of the previous claims, **characterized in that** the first storage medium (12) is stored in a rigid housing (13).

5. Energy accumulator according to Claim 4, **characterized in that** the housing (13) is designed as a hollow cylinder.

6. Energy accumulator according to Claim 4 or 5, **characterized in that** the first heat exchanger arrangement (30) is arranged in the housing (13) in such a way that cooling down or heating up is substantially from the inside to the outside and axially in a predetermined direction.

7. Energy accumulator according to one of the previous claims, **characterized in that** the second heat exchanger arrangement (23) comprises heat exchanger pipes (24a, 25a, 26a) that are arranged under and/or adjacent to and/or above the housing (13).

8. Energy accumulator according to one of the previous claims, **characterized in that** the heat exchanger pipes (24a, 25a, 26a, 31a, 32a, 33a, 34a, 35a, 36a, 36c, 36e, 36g) of the various planes (31, 32, 33, 34, 35, 36, 36b, 36d, 36f, 36h) are connected parallel in terms of their flow in such a way that a heat transfer medium can flow through them in parallel.

9. Energy accumulator according to Claim 8, **characterized in that** switching means are provided to separate individual planes (31, 32, 33, 34, 35, 36, 36b, 36d, 36f, 36h) and/or heat exchanger pipes (24a, 25a, 26a, 31a, 32a, 33a, 34a, 35a, 36a, 36c, 36e, 36g) from a heat transfer medium throughflow and/or to subject them to a heat transfer medium throughflow.

10. Method for operating an energy accumulator (10) according to one of Claims 1 to 9, **characterized in that** the first storage medium (12) changes its aggregate condition when releasing or absorbing latent heat in such a way that the first and the second accumulators (11, 21) are operated seasonally varying in a first period as a cold accumulator, where heat energy is withdrawn for heating purposes from the first and/or second storage medium (12, 22), or in a second period as a heat accumulator, where cold energy is withdrawn for cooling purposes from the first and/or second storage medium (12, 22), where the first accumulator (11) is completely thermally discharged before expiry of the first period and where cooling and/or heating of the first storage medium (12) is achieved by the heat exchanger arrangement (30) substantially from the inside to the outside and axially in a predetermined direction.

11. Method according to Claim 10, **characterized in that** the first accumulator (11) is completely thermally discharged after about half of the first period.

12. Method according to Claim 10 or 11, **characterized in that** the first accumulator (11) and the second accumulator (21) are charged and/or discharged in series at least at times.

13. Method according to Claim 11 or 12, **characterized in that** the first accumulator (11) and the second accumulator (21) are charged and/or discharged in parallel at least at times.

14. Method according to one of Claims 10 to 13, **characterized in that** a supply line direction and a return line direction of a heat exchanger arrangement (30, 23) are periodically switched over.

15. Method according to one of Claims 10 to 14, **characterized in that** heat exchanger pipes (24a, 25a, 26a, 31 a, 32a, 33a, 34a, 35a, 36a, 36c, 36e, 36g) are switched on and/or switched off depending on requirements.

16. Energy accumulator system with an energy accumulator (10) according to at least one of Claims 1 to 9 and with at least one heat pump device (45) and at least one accumulator-external heat source (46) and/or a refrigerating unit, **characterized in that** each accumulator (11, 21) is connectable by its heat exchanger device (30, 23) both to the heat pump device (45) and/or to the refrigerating unit and to the heat source (46) in such a way that the heat exchanger device (30, 23) is connected in a first period to the heat pump device (45) and/or to the refrigerating unit and in a second period to the heat source (46), and where the first accumulator (11) has a temperature which is mostly below that of the earth (28), so that further energy in the form of heat can flow out of the earth (28) around the energy accumulator (10).

17. Energy accumulator system according to Claim 16, **characterized in that** the heat pump device (45) comprises an absorption heat pump.

18. Energy accumulator system according to Claim 16 or 17, **characterized in that** the heat pump device (45) comprises a compression heat pump.

19. Energy accumulator system according to one of Claims 16 to 18, **characterized in that** the first accumulator (11) has an accumulator capacity that is dimensioned such that the first accumulator (11) is completely drained before expiry of a first period for draining the energy accumulator (10).

20. Energy accumulator system according to one of Claims 16 to 19, **characterized in that** a circulating pump (53) is provided for withdrawing cold from the energy accumulator (10).

21. Energy accumulator system according to one of Claims 16 to 20, **characterized in that** switching means are provided to switch over a supply line (33.1, 24.1) and a return line (33.2, 24.2) of the first and/or second heat exchanger device (30, 23).

22. Method for operating an energy accumulator system according to at least one of Claims 16 to 21, **characterized in that** the energy accumulator (10) is operated seasonally varying either as a cold accumulator or as a heat accumulator, where during one period heat withdrawn from one or more consumers supplied by the energy accumulator system (10) is used as heating output in another period, and where the first accumulator (11) has a temperature which is mostly below that of the earth (28), so that further energy in the form of heat can flow out of the earth (28) around the energy accumulator (10), where the first accumulator (11) is completely thermally discharged before expiry of the first period and where cooling and/or heating of the first storage medium (12) is achieved by the heat exchanger arrangement (30) substantially from the inside to the outside and axially in a predetermined direction.

23. Method according to Claim 22, **characterized in that** the first accumulator (11) is completely thermally discharged after about half of the first period.

24. Method according to Claim 22 or 23, **characterized in that** the first accumulator (11) and the second accumulator (21) are charged and/or discharged in series at least at times.

25. Method according to one of Claims 22 to 24, **characterized in that** the first accumulator (11) and the second accumulator (21) are charged and/or discharged in parallel at least at times.

26. Method according to one of Claims 22 to 25, **characterized in that** a supply line direction and a return line direction of a heat exchanger device (30, 23) of the energy accumulator (10) are periodically switched over.

27. Heat exchanger arrangement of an energy accumulator (10) according to one of Claims 1 to 9, with a first accumulator (11) with a first storage medium (12), where the first storage medium (12) is water that is frozen and thawed, with a stack (44) of a plurality of planes (31, 32, 33, 34, 35, 36, 36b, 36d, 36f, 36h) positioned one above the other and axially apart in one stacking direction (29) with concentrically spiral heat exchanger pipes (31 a, 32a, 33a, 34a, 35a, 36a, 36c, 36e, 36g), **characterized in that** in each plane (31, 32, 33, 34, 35, 36, 36b, 36d, 36f, 36h) a return line (33.2) of the heat exchanger pipes (31 a, 32a, 33a, 34a, 35a, 36a, 36c, 36e, 36g) is arranged radially next to a supply line (33.1) and a supply line (31.1, 32,1) is arranged above and/or below a return line (31.2, 32.2) of the heat exchanger pipes (31a, 32a, 33a, 34a, 35a, 36a, 36c, 36e, 36g) relative to consecutive planes (31, 32, 33, 34, 35, 36, 36b, 36d, 36f, 36h), where the heat exchanger pipes (31 a, 32a, 33a, 34a, 35a, 36a, 36c, 36e, 36g) within one plane are divided into at least two areas (38, 39), where in the area (38) close to the center a shorter distance between adjacent heat exchanger pipes (31a, 32a, 33a, 34a, 35a, 36a, 36c, 36e, 36g) is provided than in the area (39) further from the center.

28. Heat exchanger arrangement according to Claim 27, **characterized in that** the stack (44) has a cylindrical section (44b) at least in some areas.

29. Heat exchanger arrangement according to Claim 27 or 28, **characterized in that** the stack (44) has a semihemispherical section (44a) at least in some areas.

30. Heat exchanger arrangement according to one of Claims 27 to 29, **characterized in that** at least one of the planes (31, 32, 33, 34, 35, 36, 36b, 36d, 36f, 36h) comprises a spoked wheel-like base on which a respective winding of the heat exchanger pipes (31a, 32a, 33a, 34a, 35a, 36a, 36c, 36e, 36g) is fastened.

31. Heat exchanger arrangement according to Claim 30, **characterized in that** the spoked wheel-like base can be locked in a mounting position for mounting of the respective heat exchanger pipes (31a, 32a, 33a, 34a, 35a, 36a, 36c, 36e, 36g).

32. Heat exchanger arrangement according to one of Claims 30 to 31, **characterized in that** the spoked wheel-like base can be axially moved into a storage position after mounting of the respective heat exchanger pipes (31 a, 32a, 33a, 34a, 35a, 36a, 36c, 36e, 36g).

33. Heat exchanger arrangement according to one of Claims 27 to 32, **characterized in that** the planes (31, 32, 33, 34, 35, 36, 36b, 36d, 36f, 36h) have at one end (41) of the stack (44) a shorter distance from one another than at an end (42) opposite thereto.

## Revendications

1. Accumulateur d'énergie présentant un premier accumulateur interne (11) doté d'un premier agent d'accumulation (12) et d'un premier dispositif d'échange de chaleur (30), et un second accumulateur (21) entourant le premier accumulateur (11) et doté d'un second agent d'accumulation (22) et d'un second dispositif d'échange de chaleur (22), sachant que le second agent d'accumulation (22) englobe le terrain,
**caractérisé en ce que** le premier accumulateur (11) est conçu sous forme d'accumulateur de chaleur latente et que le premier dispositif d'échange de chaleur (30) comprend une pile (44) de plusieurs niveaux (31, 32, 33, 34, 35, 36, 36b, 36d, 36f, 36h) superposés et axialement distants dans le sens d'empilage (29) avec des tubes d'échangeur de chaleur (31a, 32a, 33a, 34a, 35a, 36a, 36c, 36e, 36g) enroulés de manière concentrique, sachant qu'à chaque niveau (31, 32, 33, 34, 35, 36, 36b, 36d, 36f, 36h) est disposé radialement à côté d'une arrivée (33.1), un retour (33.2) des tubes d'échangeur de chaleur (31a, 32a, 33a, 34a, 35a, 36a, 36c, 36e, 36g), que, par rapport aux niveaux se succédant (31, 32, 33, 34, 35, 36, 36b, 36d, 36f, 36h), une arrivée (31.1, 32.1) est respectivement disposée au-dessus et/ou au-dessous d'un retour (31.2, 32.2) des tubes d'échangeur de chaleur (31a, 32a, 33a, 34a, 35a, 36a, 36c, 36e, 36g) et que les tubes d'échangeur de chaleur (31a, 32a, 33a, 34a, 35a, 36a, 36c, 36e, 36g) sont divisés en au moins deux zones (38, 39) au sein d'un niveau, sachant que la distance séparant les arrivées (33.1) et les retours (33.2) adjacents des tubes d'échangeur de chaleur (31a, 32a, 33a, 34a, 35a, 36a, 36c, 36e, 36g) est plus faible dans la zone proche du centre (38) que dans la zone plus éloignée du centre (39).

2. Accumulateur d'énergie selon la revendication 1, **caractérisé en ce que** le premier accumulateur (11) présente une capacité d'accumulation calculée de telle manière que le premier accumulateur (11) est entièrement déchargé thermiquement avant le déroulement d'une première période, durant laquelle le premier accumulateur (11) fonctionne comme accumulateur de froid.

3. Accumulateur d'énergie selon la revendication 2, **caractérisé en ce que** la capacité d'accumulation est calculée de telle manière que le premier accumulateur (11) est déchargé approximativement à la moitié de la première période.

4. Accumulateur d'énergie selon l'une des revendications précédentes, **caractérisé en ce que** le premier agent d'accumulation (12) est stocké dans un boîtier rigide (13).

5. Accumulateur d'énergie selon la revendication 4, **caractérisé en ce que** le boîtier (13) présente la forme d'un cylindre creux.

6. Accumulateur d'énergie selon la revendication 4 ou 5, **caractérisé en ce que** le premier dispositif d'échange de chaleur (30) est disposé de telle manière dans le boîtier (13) qu'un refroidissement et/ou un réchauffement a lieu essentiellement de l'intérieur vers l'extérieur et axialement dans une direction prédéfinie.

7. Accumulateur d'énergie selon l'une des revendications précédentes, **caractérisé en ce que** le second dispositif d'échange de chaleur (23) comprend des tubes d'échangeur de chaleur (24a, 25a, 26a) qui sont disposés au-dessous et/ou à côté et/ou au-dessus du boîtier (13).

8. Accumulateur d'énergie selon l'une des revendications précédentes, **caractérisé en ce que** les tubes d'échangeur de chaleur (24a, 25a, 26a, 31a, 32a, 33a, 34a, 35a, 36a, 36c, 36e, 36g) des différents niveaux (31, 32, 33, 34, 35, 36, 36b, 36d, 36f, 36h) sont, en termes d'écoulement, montés en parallèle, de telle manière qu'ils puissent être traversés parallèlement par un fluide caloporteur.

9. Accumulateur d'énergie selon la revendication 8, **caractérisé en ce que** sont prévus des moyens de commutation pour séparer les différents niveaux (31, 32, 33, 34, 35, 36, 36b, 36d, 36f, 36h) et/ou tubes d'échangeur de chaleur (24a, 25a, 26a, 31a, 32a, 33a, 34a, 35a, 36a, 36c, 36e, 36g) de la circulation du fluide caloporteur et/ou pour les faire traverser par le fluide caloporteur.

10. Procédé de fonctionnement d'un accumulateur d'énergie (10) selon l'une des revendications 1 à 9, **caractérisé en ce que** le premier agent d'accumulation (12) change son état physique lors du dégagement ou de l'absorption de chaleur latente, si bien que le premier et le second accumulateurs (11, 21) sont utilisés de manière variable en fonction de la saison, soit comme accumulateur de froid dans une première période, l'énergie thermique destinée au chauffage provenant alors du premier et/ou second agent d'accumulation (12, 22), soit comme accumulateur de chaleur dans une seconde période, l'énergie refroidissante destinée au refroidissement provenant alors du premier et/ou second agent d'accumulation (12, 22), sachant que le premier accumulateur (11) est entièrement déchargé thermiquement avant le déroulement de la première période, et qu'un refroidissement et/ou un réchauffement du premier agent d'accumulation (12) par le dispositif d'échange de chaleur (30) a lieu essentiellement de l'intérieur vers l'extérieur et axialement dans une direction prédéfinie.

11. Procédé selon la revendication 10, **caractérisé en ce que** le premier accumulateur (11) est entièrement déchargé thermiquement à approximativement la moitié de la période.

12. Procédé selon la revendication 10 ou 11, **caractérisé en ce que** le premier accumulateur (11) et le second accumulateur (21) sont chargés et/ou déchargés au moins temporairement de façon sérielle.

13. Procédé selon la revendication 11 ou 12, **caractérisé en ce que** le premier accumulateur (11) et le second accumulateur (21) sont chargés et/ou déchargés au moins temporairement en parallèle.

14. Procédé selon l'une des revendications 10 à 13, **caractérisé en ce qu'**un sens d'arrivée et un sens de retour d'un dispositif d'échange de chaleur (30, 23) peuvent être commutés périodiquement.

15. Procédé selon l'une des revendications 10 à 14, **caractérisé en ce que** des tubes d'échangeur de chaleur (24a, 25a, 26a, 31a, 32a, 33a, 34a, 35a, 36a, 36c, 36e, 36g) peuvent être activés ou désactivés en fonction des besoins.

16. Système d'accumulation d'énergie (10) présentant un accumulateur d'énergie selon au moins l'une des revendications 1 à 9, ainsi qu'au moins un système de pompe à chaleur (45) et au moins une source de chaleur (46) extérieure à l'accumulateur et/ou un groupe frigorifique, **caractérisé en ce que** chaque accumulateur (11, 21) peut avec son dispositif d'échange de chaleur (30, 23) être relié aussi bien au système de pompe à chaleur (45) et/ou au groupe frigorifique qu'à la source de chaleur (46), et ce de telle manière que le dispositif d'échange de chaleur (30, 23) est relié dans une première période au système de pompe à chaleur (45) et/ou au groupe frigorifique et, dans une seconde période, à la source de chaleur (46), sachant que le premier accumulateur (11) présente une température au moins inférieure à celle du terrain (28), si bien que de l'énergie sous forme de chaleur peut provenir du terrain (28) entourant l'accumulateur d'énergie (10).

17. Système d'accumulation d'énergie selon la revendication 16, **caractérisé en ce que** le système de pompe à chaleur (45) comprend une pompe à chaleur à absorption.

18. Système d'accumulation d'énergie selon la revendication 16 ou 17, **caractérisé en ce que** le système de pompe à chaleur (45) comprend une pompe à chaleur à compression.

19. Système d'accumulation d'énergie selon l'une des revendications 16 à 18, **caractérisé en ce que** le premier accumulateur (11) présente une capacité d'accumulation calculée de telle manière que le premier accumulateur (11) est entièrement vidé avant le déroulement d'une première période pour le vidage de l'accumulateur d'énergie (10).

20. Système d'accumulation d'énergie selon l'une des revendications 16 à 19, **caractérisé en ce qu'**est prévue une pompe de circulation (53) pour le retrait du froid de l'accumulateur d'énergie (10).

21. Système d'accumulation d'énergie selon l'une des revendications 16 à 20, **caractérisé en ce que** sont prévus des moyens de commutation pour commuter une arrivée (33.1, 24.1) et un retour (33.2, 24.2) du premier et/ou second dispositif d'échange de chaleur (30, 23).

22. Procédé de fonctionnement d'un système d'accumulation d'énergie selon au moins l'une des revendications 16 à 21, **caractérisé en ce que** l'accumulateur d'énergie (10) est utilisé de façon variable en fonction de la saison, soit comme un accumulateur de froid, soit comme un accumulateur de chaleur, sachant que la chaleur extraite durant une période d'un ou plusieurs consommateurs alimentés par le système d'accumulation d'énergie (10) est utilisée comme puissance de chauffage durant une autre période, que le premier accumulateur (11) présente une température au moins inférieure à celle du terrain (28), si bien que de l'énergie sous forme de chaleur peut provenir du terrain (28) entourant l'accumulateur d'énergie (10), que le premier accumulateur (11) est entièrement déchargé thermiquement avant le déroulement de la première période, et qu'un refroidissement et/ou un réchauffement du premier agent d'accumulation (12) par le dispositif d'échange de chaleur (30) a lieu essentiellement de l'intérieur vers l'extérieur et axialement dans une direction prédéfinie.

23. Procédé selon la revendication 22, **caractérisé en ce que** le premier accumulateur (11) est entièrement déchargé thermiquement à approximativement la moitié de la première période.

24. Procédé selon la revendication 22 ou 23, **caractérisé en ce que** le premier accumulateur (11) et le second accumulateur (21) sont chargés et/ou déchargés au moins temporairement de façon sérielle.

25. Procédé selon l'une des revendications 22 à 24, **caractérisé en ce que** le premier accumulateur (11) et le second accumulateur (21) sont chargés et/ou déchargés au moins temporairement en parallèle.

26. Procédé selon l'une des revendications 22 à 25, **caractérisé en ce qu'**un sens d'arrivée et un sens de retour d'un dispositif d'échange de chaleur (30, 23) de l'accumulateur d'énergie (10) peuvent être commutés périodiquement.

27. Dispositif d'échange de chaleur d'un accumulateur d'énergie (10) selon l'une des revendications à 1 à 9, présentant un premier accumulateur (11) avec un premier agent d'accumulation (12), sachant que le premier agent d'accumulation (12) est de l'eau qui est gelée et dégelée, avec une pile (44) de plusieurs niveaux (31, 32, 33, 34, 35, 36, 36b, 36d, 36f, 36h) superposés et axialement distants dans le sens d'empilage (29) avec des tubes d'échangeur de chaleur (31a, 32a, 33a, 34a, 35a, 36a, 36c, 36e, 36g) enroulés de manière concentrique, **caractérisé en ce qu'**à chaque niveau (31, 32, 33, 34, 35, 36, 36b, 36d, 36f, 36h) est disposé radialement à côté d'une arrivée, (33.1) un retour (33.2) des tubes d'échangeur de chaleur (31a, 32a, 33a, 34a, 35a, 36a, 36c, 36^{e}, 36g), que, par rapport aux niveaux se succédant (31, 32, 33, 34, 35, 36, 36b, 36d, 36f, 36h), une arrivée (31.1, 32.1) est respectivement disposée au-dessus et/ou au-dessous d'un retour (31.2, 32.2) des tubes d'échangeur de chaleur (31a, 32a, 33a, 34a, 35a, 36a, 36c, 36e, 36g), sachant que les tubes d'échangeur de chaleur (31a, 32a, 33a, 34a, 35a, 36a, 36c, 36^{e}, 36g) sont divisés en au moins deux zones (38, 39) au sein d'un niveau, et que la distance séparant les tubes d'échange de chaleur (31a, 32a, 33a, 34a, 35a, 36a, 36c, 36e, 36g) adjacents est plus faible dans la zone proche du centre (38) que dans la zone plus éloignée du centre (39).

28. Dispositif d'échange de chaleur selon la revendication 27, **caractérisé en ce que** la pile (44) présente au moins en partie un profil cylindrique (44b).

29. Dispositif d'échange de chaleur selon la revendication 27 ou 28, **caractérisé en ce que** la pile (44) présente au moins en partie un profil hémisphérique (44a).

30. Dispositif d'échange de chaleur selon l'une des revendications 27 à 29, **caractérisé en ce qu'**au moins un des niveaux (31, 32, 33, 34, 35, 36, 36b, 36d, 36f, 36h) comprend une base semblable à une roue à rayons sur laquelle est fixé un enroulement respectif des tubes d'échangeur de chaleur (31a, 32a, 33a, 34a, 35a, 36a, 36c, 36e, 36g).

31. Dispositif d'échange de chaleur selon la revendication 30, **caractérisé en ce que** la base semblable à une roue à rayons peut être bloquée dans une position de montage pour le montage du tube correspondant parmi les tubes d'échangeur de chaleur (31a, 32a, 33a, 34a, 35a, 36a, 36c, 36e, 36g).

32. Dispositif d'échange de chaleur selon l'une des revendications 30 à 31, **caractérisé en ce que** la base semblable à une roue à rayons peut être déplacée axialement dans une position d'accumulation après le montage du tube correspondant parmi les tubes d'échange de chaleur (31a, 32a, 33a, 34a, 35a, 36a, 36c, 36c, 36g).

33. Dispositif d'échange de chaleur selon l'une des revendications 27 à 32, **caractérisé en ce que** les niveaux (31, 32, 33, 34, 35, 36, 36b, 36d, 36f, 36h) présentent entre eux un écart moins important à une extrémité (41) de la pile (44) qu'à l'extrémité opposée (42).
